# EUROPEAN PATENT APPLICATION

(11) **EP 4 046 742 A1**
(43) Date of publication of application: **24.08.2022**
(21) Application number: 19953018.9
(22) Date of filing: 22.11.2019
(51) Int. Cl.: B23K 26/38, B29C 70/28

(54) **LASER PROCESSING METHOD, AND LASER PROCESSING DEVICE**

(71) Applicant: Mitsubishi Heavy Industries, Ltd., 100-8332 Tokyo (JP)
(72) Inventor: GOYA, Saneyuki, Tokyo 100-8332 (JP); INOUE, Akiko, Tokyo 100-8332 (JP); NARITA, Ryuichi, Tokyo 100-8332 (JP); OKUDA, Akihisa, Tokyo 100-8332 (JP); OZAKI, Ryota, Tokyo 100-8332 (JP); SHIMIZU, Masahiko, Tokyo 100-8332 (JP); MORI, Hiroki, Tokyo 100-8332 (JP)
(74) Representative: Hoffmann Eitle
(86) International application number: PCT/JP2019/045830
(87) International publication number: WO 2021/100201

(57) **Abstract**

The objective of the present invention is to suppress inter-layer peeling. This laser processing method for performing a cutting process to cut a base material, including a first layer and a second layer which is stacked onto one surface of the first layer, and which has a different thermal expansion coefficient to the first layer, by radiating laser light onto the base material, includes a step of radiating the laser light onto a first inter-layer part under prescribed first inter-layer conditions, to cut the first inter-layer part, which extends from a position in the vicinity of a layer boundary inward of the surface of the second layer, through the layer boundary between the second layer and the first layer, to a position in the vicinity of a layer boundary inward of said one surface of the first layer, and a step of radiating the laser light onto a part of the first layer inward from the position in the vicinity of the layer boundary, under first conditions, to cut the first layer, wherein the first inter-layer condition is a condition under which the amount of heat input by the laser light is less than under the first condition.

## Description

### Technical Field

The present disclosure relates to a laser processing method and a laser processing device.

### Background Art

In the related art, a laser processing method for a composite material is known, which is for executing a first step of irradiating a processed portion of a composite material with a high-power laser beam in a plurality of lines at a high-speed sweep speed in a plurality of paths and a second step of reducing the multi linearity in a case where a processing depth gradually increases in accordance with the progress of the first step (refer to, for example, PTL 1). Further, PTL 2 describes an aircraft assembly in which conductive foils made of different materials, a skin, and a structural material are laminated.

### Citation List

### Patent Literature

[PTL 1] Japanese Unexamined Patent Publication No. 2016-107574
[PTL 2] Japanese Unexamined Patent Publication No. 2009-227166

Here, for example, a member such as PTL 2 in which a plurality of layers having different materials are laminated may be subjected to laser processing as in PTL 1, for example. In such a case, inter-layer peeling may occur due to the heat input of the laser light due to the difference in the thermal expansion coefficient between the layers of the member. Therefore, in the case of performing laser processing on a composite material in which a plurality of layers are laminated, it is necessary to suppress inter-layer peeling.

The present disclosure is to solve the above-mentioned problems, and an object of the present invention is to provide a laser processing method and a laser processing device capable of suppressing inter-layer peeling in a case of performing laser processing on a member in which a plurality of layers are laminated.

### Summary of Invention

### Solution to Problem

In order to solve the above-mentioned problems and achieve the object, according to the present disclosure, there is provided a laser processing method of performing cutting processing of cutting a base material, which includes a first layer and a second layer laminated on one surface of the first layer and having a thermal expansion coefficient different from a thermal expansion coefficient of the first layer, by irradiating the base material with laser light. The laser processing method includes: a step of cutting a first inter-layer part, which extends from a near-inter-layer position inward from a surface of the second layer in a lay-up direction to a near-inter-layer position inward from the one surface of the first layer in a lay-up direction through an inter-layer between the second layer and the first layer, by irradiating the first inter-layer part with the laser light under a predetermined first inter-layer condition; and a step of cutting the first layer by irradiating a part of the first layer inward from the near-inter-layer position in the lay-up direction with the laser light under a first condition in which an amount of heat input by the laser light is greater than an amount of heat input under the first inter-layer condition.

In order to solve the above-mentioned problems and achieve the object, according to the present disclosure, there is provided a laser processing method of performing cutting processing of cutting a base material, which includes a first layer and a second layer laminated on a surface of the first layer and having a thermal expansion coefficient different from a thermal expansion coefficient of the first layer, by irradiating the base material with laser light. The laser processing method includes: a step of disposing the second layer on a side opposite to a side irradiated with the laser light; a step of cutting the first layer by irradiating the first layer with the laser light while supplying a cooling medium to the second layer to cool the second layer; and a step of cutting the second layer by irradiating the second layer with the laser light after cutting the first layer.

In order to solve the above-mentioned problems and achieve the object, according to the present disclosure, there is provided a laser processing device that performs cutting processing of cutting a base material, which includes a first layer and a second layer laminated on one surface of the first layer and having a thermal expansion coefficient different from a thermal expansion coefficient of the first layer, by irradiating the base material with laser light. The laser processing device includes: a laser irradiation part that irradiates the base material with the laser light; and a controller that controls an operation of the laser irradiation part. The controller cuts a first inter-layer part, which extends from a near-inter-layer position inward from a surface of the second layer in a lay-up direction to a near-inter-layer position inward from the one surface of the first layer in a lay-up direction through an inter-layer between the second layer and the first layer, by irradiating the first inter-layer part with the laser light under a predetermined first inter-layer condition, and cuts the first layer by irradiating a part of the first layer inward from the near-inter-layer position in the lay-up direction with the laser light under a first condition in which an amount of heat input by the laser light is greater than an amount of heat input under the first inter-layer condition.

In order to solve the above-mentioned problems and achieve the object, according to the present disclosure, there is provided a laser processing device that performs cutting processing of cutting a base material, which includes a first layer and a second layer laminated on one surface of the first layer and having a thermal expansion coefficient different from a thermal expansion coefficient of the first layer, by irradiating the base material with laser light. The laser processing device includes: a laser irradiation part that irradiates the base material with the laser light; a cooling part that supplies a cooling medium to the base material; and a controller that controls operations of the laser irradiation part and the cooling part. The controller cuts the first layer from the base material, in which the second layer is disposed on a side opposite to a side irradiated with the laser light, by irradiating the first layer with the laser light while supplying the cooling medium to the second layer to cool the second layer, and cuts the second layer by irradiating the second layer with the laser light after cutting the first layer.

### Advantageous Effects of Invention

According to the present invention, inter-layer peeling can be suppressed.

### Brief Description of Drawings

Fig. 1 is a diagram schematically showing a laser processing device according to a first embodiment.
Fig. 2 is a schematic block diagram of a control device according to the first embodiment.
Fig. 3 is a flowchart showing a laser processing method according to the first embodiment.
Fig. 4 is a schematic diagram showing the laser processing method according to the first embodiment.
Fig. 5 is a schematic diagram showing the laser processing method according to the first embodiment.
Fig. 6 is a schematic diagram showing the laser processing method according to the first embodiment.
Fig. 7 is a schematic diagram showing the laser processing method according to the first embodiment.
Fig. 8 is a schematic diagram showing the laser processing method according to the first embodiment.
Fig. 9 is a schematic diagram showing the laser processing method according to the first embodiment.
Fig. 10 is a schematic diagram showing another example of the laser processing method according to the first embodiment.
Fig. 11 is a schematic diagram showing a laser processing method according to a second embodiment.
Fig. 12 is a schematic diagram showing a laser processing method according to a third embodiment.
Fig. 13 is a diagram schematically showing a laser processing device according to a fourth embodiment.
Fig. 14 is a schematic diagram showing an example of a base material according to a fourth embodiment.
Fig. 15 is a schematic diagram showing an example of the base material according to the fourth embodiment.
Fig. 16 is a schematic diagram showing an example of the base material according to the fourth embodiment.
Fig. 17 is a schematic diagram showing a laser processing method according to the fourth embodiment. Description of Embodiments

Preferred embodiments of the present invention will be described in detail later with reference to the accompanying drawings. It should be noted that the present invention is not limited to this embodiment, and the present invention also includes a combination of the respective embodiments in a case where there are a plurality of embodiments.

### (First Embodiment)

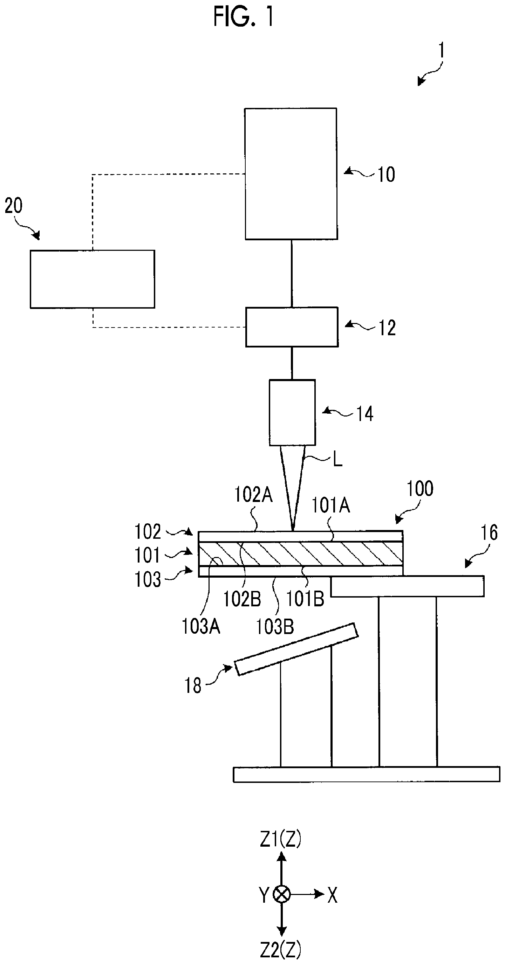

Fig. 1 is a diagram schematically showing a laser processing device according to a first embodiment. As shown in Fig. 1, the laser processing device 1 according to the first embodiment is a device capable of irradiating a base material 100 to be processed with laser light L to perform cutting processing of cutting the base material 100.

### (Composition of Base Material)

The base material 100 includes a composite material. Examples of the composite material include fiber reinforced plastics such as carbon fiber reinforced plastics (CFRP), glass fiber reinforced plastics (GFRP), and glass long fiber reinforced plastics (GMT). More specifically, the base material 100 is constituted of a plurality of layers having different materials. The base material 100 includes a first layer 101, a second layer 102, and a third layer 103. In the present embodiment, the first layer 101 and the second layer 102 have different thermal expansion coefficients, and the first layer 101 and the third layer 103 have different thermal expansion coefficients. In the present embodiment, the thermal expansion coefficients of the second layer 102 and the third layer 103 are also different, but the thermal expansion coefficients of the second layer 102 and the third layer 103 may be equal to each other. The thermal expansion coefficient described herein is a coefficient of linear thermal expansion.

At least one of the first layer 101, the second layer 102, or the third layer 103 is a layer of a composite material. In the present embodiment, the first layer 101 is a layer constituted of a composite material, and more specifically, CFRP. Further, in the present embodiment, the second layer 102 is a layer that has a higher thermal expansion coefficient than the first layer 101, and is a layer constituted of a metal such as copper, for example. Further, in the present embodiment, the third layer 103 is a layer that has a higher thermal expansion coefficient than the first layer 101, and is a layer constituted of a composite material, such as GFRP, having a higher thermal expansion coefficient than the first layer 101. In the example of the present embodiment, the thermal expansion coefficient of the second layer 102 is greater than the thermal expansion coefficient of the third layer 103. However, the thermal expansion coefficient of the second layer 102 is not limited to being greater than the thermal expansion coefficient of the third layer 103, and may be the same value, or may be a value less than the thermal expansion coefficient of the third layer 103. The materials of the first layer 101, the second layer 102, and the third layer 103 are not limited to the materials described above. For example, the second layer 102 may be constituted of a composite material, such as GFRP, having a higher thermal expansion coefficient than the first layer 101, or the third layer 103 may be constituted of a metal such as copper. Furthermore, although the second layer 102 and the third layer 103 use different materials in the example of the present embodiment, the layers may use the same material such that both are GFRP.

The second layer 102 is formed on one surface 101A of the first layer 101. In the second layer 102, one surface 102A is exposed to the outside as one surface of the entire base material 100, and the other surface 102B is bonded to the surface 101A of the first layer 101. Further, the third layer 103 is formed on the other surface 101B of the first layer 101. In the third layer 103, one surface 103A is bonded to the surface 101B of the first layer 101, and the other surface 103B is exposed to the outside as the other surface of the entire base material 100. The means for bonding the first layer 101 and the second layer 102 and the means for bonding the first layer 101 and the third layer 103 are optional. However, for example, the layers may be bonded through the adhesive (adhesive layer) formed between the layers. In addition, the layers may be bonded or may be bonded by the resin contained in the composite material in the layer.

In such a manner, in the base material 100, the third layer 103, the first layer 101, and the second layer 102 are laminated in this order. However, the lay-up order of the first layer 101, the second layer 102, and the third layer 103 is not limited thereto, and is optional. The base material 100 is not limited to including all of the first layer 101, the second layer 102, and the third layer 103, and may include at least one of the first layer 101, the second layer 102, or the third layer 103. In other words, the base material 100 may include the first layer 101 and the second layer 102 and may not include the third layer 103, or may include the first layer 101 and the third layer 103 and may not include the second layer 102. The base material 100 is, for example, a member for an aircraft, but is not limited to the member for an aircraft and may be used for any purpose.

### (Overall Configuration of Laser Processing Device)

As shown in Fig. 1, the laser processing device 1 includes a laser irradiating device 10 as a laser irradiation part, a scanning optical system 12, a light condensing optical system 14, a support table 16, a light receiving unit 18, and a control device 20 as a controller. The X direction, the Y direction, and the Z direction are defined below. The Y direction is a direction orthogonal to the X direction. The Z direction is a direction orthogonal to the X direction and the Y direction. One of the directions along the Z direction is defined as the Z1 direction, and the other direction of the directions along the Z direction, that is, the direction opposite to the Z1 direction is defined as the Z2 direction. In the present embodiment, the X direction and the Y direction are directions along the horizontal direction, the Z1 direction is a direction toward the upper side of the vertical direction, and the Z2 direction is a direction toward the lower side in the vertical direction, but the present invention is not limited thereto.

The laser irradiating device 10 is a device that outputs the laser light L. The laser irradiating device 10 may output a pulse wave (Continuous Wave) or a continuous wave (CW) as the laser light L. In the present embodiment, it is preferable to use a laser irradiating device 10 that illuminates the laser light L that becomes a continuous wave capable of continuously supplying energy. Further, the laser irradiating device 10 may illuminate the laser light L in a single mode or a multi-mode. In the present embodiment, it is preferable to use the laser irradiating device 10 that illuminates the laser light L in a single mode having a high light-collecting property. The wavelength band of the laser light L which is output by the laser irradiating device 10 may be optional, but may include, for example, a wavelength band around 1 µm, a green wavelength band, a blue wavelength band, an ultraviolet light wavelength band, or the like. The laser irradiating device 10 outputs the laser light L having an output value of 0.1 kW or more and 50 kW or less, but the output value is not limited thereto. Further, the laser irradiating device 10 is able to change the output value of the laser light L.

The scanning optical system 12 is an optical system that scans the laser light L emitted from the laser irradiating device 10 on the base material 100. The scanning optical system 12 includes a scanner capable of scanning the laser light L, and as the scanner, for example, a galvano mirror is used. In the present embodiment, the scanning optical system 12 scans the laser light L illuminated on the base material 100, in other words, the irradiation position of the laser light L on the base material 100 in the Y direction. That is, in the present embodiment, the Y direction is the scanning direction of the laser light L. The scanning optical system 12 preferably sets a moving speed of the laser light L in the scanning direction, that is, a scanning speed (feeding speed) of the laser light L to 1 m/min or more and 1000 m/min or less, but the scanning speed is limited thereto and may be optional. Further, the scanning optical system 12 is able to change the scanning speed of the laser light L. The scanning optical system 12 is not limited to scanning the laser light L irradiated to the base material 100 in the Y direction, and may scan the laser light L in at least one of the X direction or the Y direction.

The light condensing optical system 14 is an optical system that condenses the laser light L emitted from the scanning optical system 12 at a focal point and irradiates the base material 100 with the condensed laser light L. The light condensing optical system 14 includes an optical member such as a condensing lens. The light condensing optical system 14 illuminates the laser light L incident through the laser irradiating device 10 and the scanning optical system 12 in the Z2 direction.

The support table 16 is disposed on the Z2 direction side of the light condensing optical system 14. The support table 16 supports the base material 100 at a predetermined position. In the present embodiment, the support table 16 supports the base material 100 such that the surface of the base material 100 is in parallel with the X direction and the Y direction. That is, the base material 100 is supported by the support table 16 such that the lay-up direction of the first layer 101, the second layer 102, and the third layer 103 faces toward the Z direction. The laser light L emitted from the laser irradiating device 10 in the Z2 direction is irradiated substantially perpendicular to the surface of the base material 100 disposed on the support table 16.

In the present embodiment, the support table 16 is a moving stage that moves the base material 100 in the X direction. However, the present invention is not limited thereto, and the support table 16 may be configured to move the base material 100 in at least one of the X direction or the Y direction, or may be configured not to move the base material 100.

The light receiving unit 18 is disposed on the Z2 direction side with respect to the light condensing optical system 14 and the support table 16. The light receiving unit 18 is disposed on the traveling direction side of the laser light L from the light condensing optical system 14. The light receiving unit 18 is a member that receives the laser light L which was illuminated toward the base material 100, that is, the laser light L transmitted through the base material 100. The light receiving unit 18 absorbs the received laser light L. The light receiving unit 18 is constituted of a member that absorbs the laser light L, and is, for example, a plate-like component constituted of iron, but the material is not limited thereto.

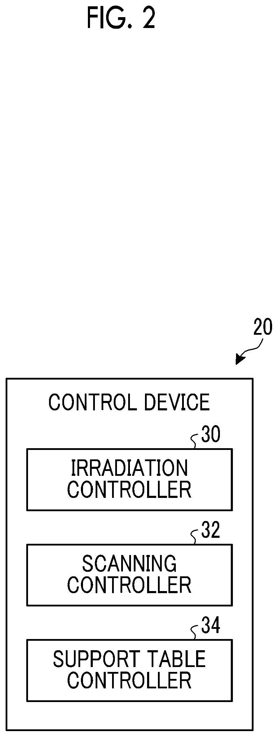

Fig. 2 is a schematic block diagram of the control device according to the first embodiment. The control device 20 controls an operation of each unit of the laser processing device 1. The control device 20 is, for example, a computer, and includes an arithmetic unit, that is, a central processing unit (CPU). As shown in Fig. 2, the control device 20 includes an irradiation controller 30, a scanning controller 32, and a support table controller 34. The control device 20 implements the irradiation controller 30, the scanning controller 32, and the support table controller 34 by reading a program from a storage unit (not shown) provided by the CPU and executing the program, and executes processing through the controllers. The control device 20 may execute functions of the irradiation controller 30, the scanning controller 32, and the support table controller 34 by using one CPU, or may include a plurality of CPUs and may execute the functions by using the plurality of CPUs. Further, at least a part of the irradiation controller 30, the scanning controller 32, or the support table controller 34 may be implemented by a hardware circuit.

The irradiation controller 30 controls an operation of the laser irradiating device 10. The irradiation controller 30 controls the output of the laser light L by the laser irradiating device 10. In the present embodiment, the irradiation controller 30 controls an output value of the laser light L which is output from the laser irradiating device 10.

The scanning controller 32 controls an operation of the scanning optical system 12. By controlling the scanning optical system 12, the irradiation controller 30 scans the laser light L illuminated on the base material 100 in the Y direction, which is the scanning direction. In the present embodiment, the scanning controller 32 controls the scanning speed of the laser light L illuminated on the base material 100.

The support table controller 34 controls an operation of the support table 16 as a moving stage. The support table controller 34 controls the support table 16 to move the base material 100 supported by the support table 16 in the X direction.

The laser processing device 1 configured as described above illuminates the laser light L from the laser irradiating device 10 under the control of the control device 20, and guides the irradiated laser light L to the scanning optical system 12. The laser processing device 1 changes the irradiation position of the laser light L on the base material 100 by scanning the laser light L incident on the scanning optical system 12 under the control of the control device 20. The laser processing device 1 causes the laser light L emitted from the scanning optical system 12 to be incident on the light condensing optical system 14, and irradiates the base material 100 with the condensed laser light L.

### (Processing Method)

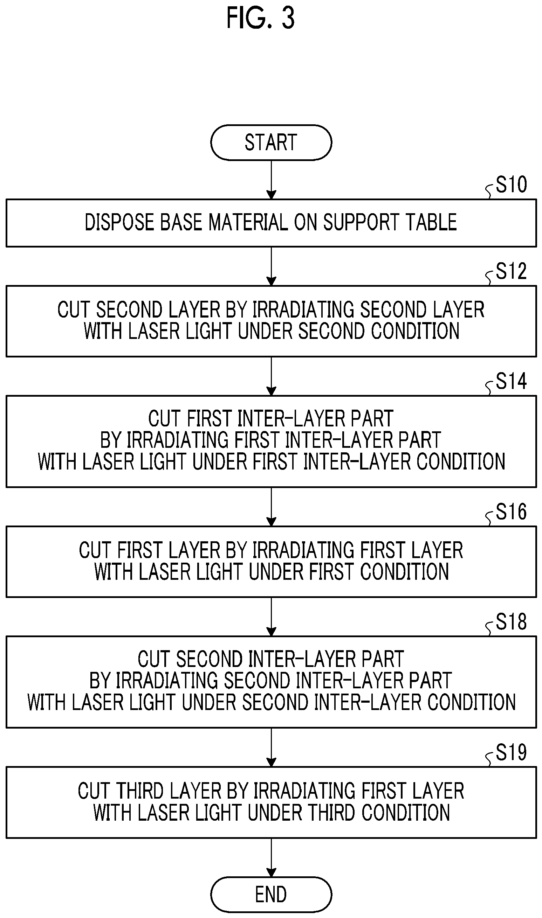

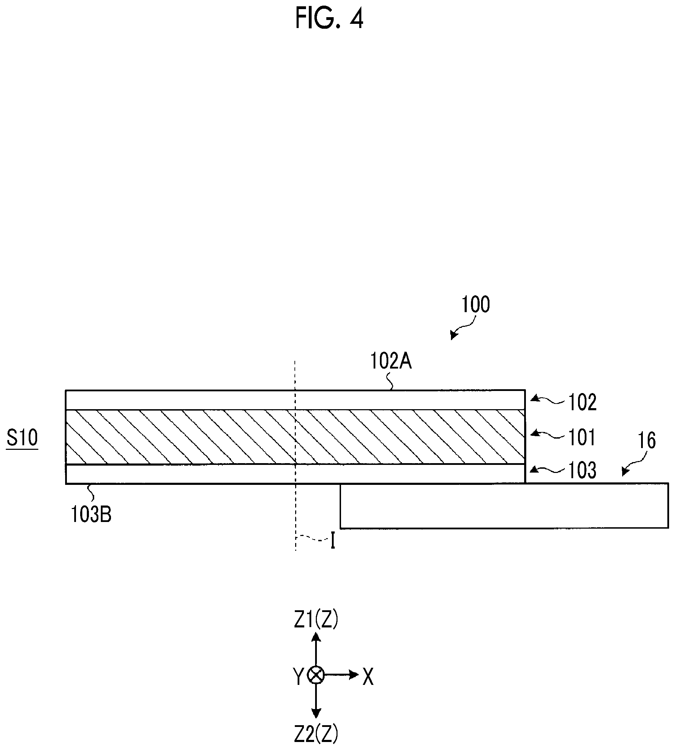

Next, a laser processing method of cutting the base material 100 by the laser processing device 1 will be described. Fig. 3 is a flowchart showing the laser processing method according to the first embodiment. Figs. 4 to 9 are schematic diagrams showing the laser processing method according to the first embodiment. Here, the base material 100 has a panel thickness of, for example, 10 mm or more.

As shown in Fig. 3, in the laser processing method according to the present embodiment, the base material 100 is disposed on the support table 16 and the base material 100 is fixed onto the support table 16 (step S10). Fig. 4 shows a state in which the base material 100 is disposed on the support table 16. As shown in Fig. 4, the base material 100 is fixed onto the support table 16 such that the second layer 102 of the base material 100 is located on the Z1 direction side, in other words, the second layer 102 is located on the side irradiated with the laser light L. That is, the base material 100 is fixed onto the support table 16 such that the third layer 103, the first layer 101, and the second layer 102 are arranged in this order toward the Z1 direction.

In the laser processing method according to the present embodiment, the product 100a is cut out from the base material 100 by performing cutting processing of cutting the base material 100. Therefore, the base material 100 is subjected to the cutting processing to form a cut-out product 100a and a remaining portion 100b which is a base material 100 after the product 100a is cut out. In the laser processing method according to the present embodiment, a processing line I which is a boundary between the product 100a and the remaining portion 100b is set in advance in the base material 100 before the cutting processing. The base material 100 is supported by the support table 16 such that at least a part of a portion to be the product 100a overlaps the support table 16 and the processing line I and a portion to be the remaining portion 100b are located outside the support table 16.

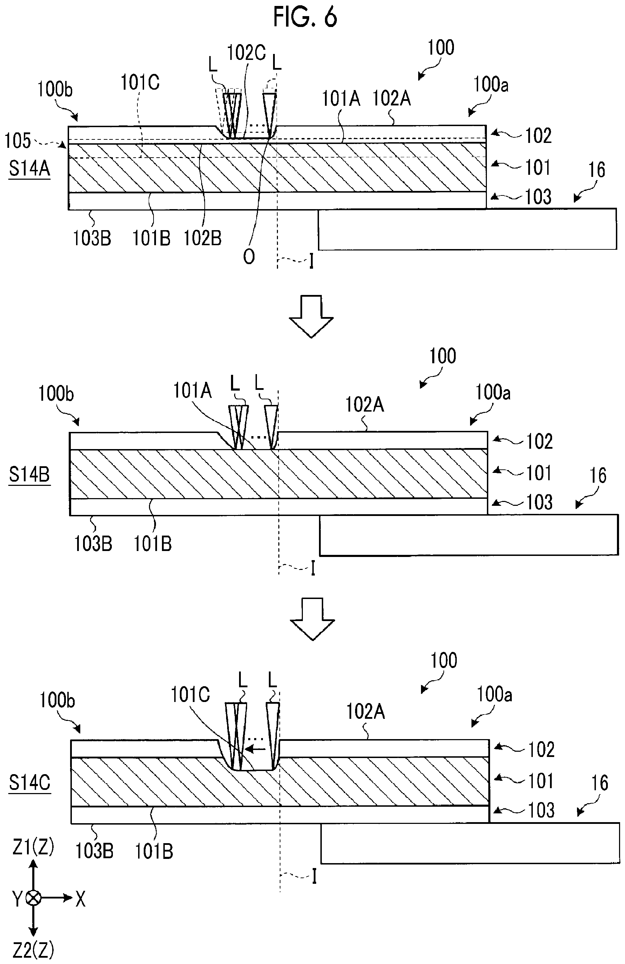

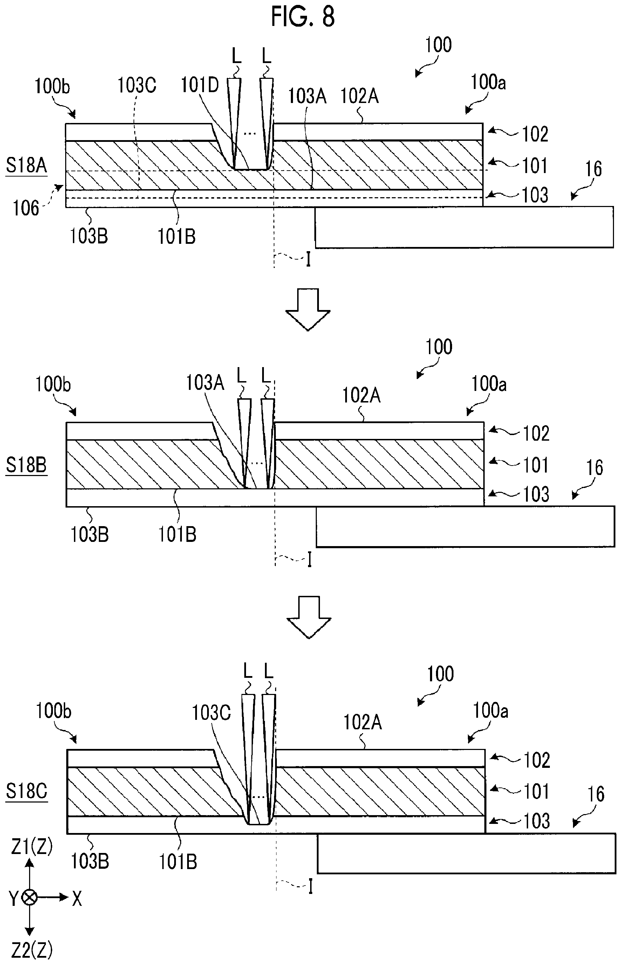

In the laser processing method according to the present embodiment, after the base material 100 is disposed on the support table 16, the laser irradiating device 10 starts the cutting processing of the base material 100 by irradiating the base material 100 with the laser light L under the control of the control device 20. The control device 20 sets different irradiation conditions of the laser light L respectively for a second layer 102, a first inter-layer part 105 including an inter-layer portion between the second layer 102 and a first layer 101, the first layer 101, a second inter-layer part 106 including the inter-layer portion between the first layer 101 and the third layer 103, and a third layer 103. As shown in Fig. 6 to be described later, the first inter-layer part 105 is a part which extends from a near-inter-layer position 102C of the second layer 102 to a near-inter-layer position 101C of the first layer 101 through the inter-layer of the second layer 102 and the first layer 101. Further, as shown in Fig. 8 to be described later, the second inter-layer part 106 is a part which extends from a near-inter-layer position 101D of the first layer 101 to a near-inter-layer position 103C of the third layer 103 through the inter-layer of the first layer 101 and the third layer 103.

That is, the control device 20 cuts the second layer 102 by irradiating the second layer 102 (more specifically, a part of the second layer 102 to the near-inter-layer position 102C) with the laser light L under the second condition, cuts the first inter-layer part 105 by irradiating the first inter-layer part 105 with the laser light L under the first inter-layer condition, and cuts the first layer 101 by irradiating the first layer 101 (more specifically, a part of the first layer 101 extending from the near-inter-layer position 101C) with the laser light L under the first condition. The first inter-layer condition is an irradiation condition in which an amount of heat input per unit time by the laser light L is greater than the amount of heat input under the first condition and the second condition. That is, the amount of heat input to the base material 100 per unit time in a case where the base material 100 is irradiated with the laser light L under the first inter-layer condition is less than the amount of heat input to the base material 100 per unit time in a case where the same position on the base material 100 is irradiated with the laser light L under the first condition and the second condition. In the present embodiment, at least one of the output value of the laser light L, the scanning speed of the laser light L, or the spot diameter of the laser light L is different between the first inter-layer condition and the first and second conditions. Furthermore, the first inter-layer condition is set such that an output value of the laser light L is less than an output value under the first condition and the second condition, a scanning speed of the laser light L is greater than a scanning speed under the first condition and the second condition, or a spot diameter is greater than a spot diameter under the first condition and the second condition. Further, the first inter-layer condition is set such that the output value of the laser light L is less than the output value under the first condition and the second condition, the scanning speed of the laser light L is greater than the scanning speed under the first condition and the second condition, and the spot diameter is greater than the spot diameter under the first condition and the second condition. By reducing the output value of the laser light L, increasing the scanning speed of the laser light L, or increasing the spot diameter, the amount of heat input per unit time can be reduced. Here, the first and second conditions and the first inter-layer condition may be set such that the amounts of heat input per unit time are different, and is not limited to being set such that the output value of the laser light L, the scanning speed of the laser light L, and the spot diameter of the laser light L are different. Under the irradiation condition to be described below, the same applies to a case where the amount of heat input per unit time by the laser light L is different from the amount of heat input under the other condition.

In the present embodiment, the amount of heat input per unit time by the laser light L is different between the first condition and the second condition. For example, in the present embodiment, since the thermal expansion coefficient of the first layer 101 is less than the thermal expansion coefficient of the second layer 102, the amount of heat input per unit time by the laser light L under the first condition may be set to be greater than the amount of heat input per unit time by the laser light L under the second condition. That is, the amount of heat input per unit time under the irradiation condition of the laser light L of a layer that has a low thermal expansion coefficient in the first layer 101 and the second layer 102 may be set to be greater than the amount of heat input per unit time under the irradiation condition of the laser light L of the layer that has a high thermal expansion coefficient. However, the present invention is not limited thereto, and the amount of heat input per unit time by the laser light L under the first condition may be less than the amount of heat input of the second condition, and may be equal to the amount of heat input per unit time under the first condition and the second condition.

Further, the control device 20 cuts the second inter-layer part 106 by irradiating the second inter-layer part 106 with the laser light L under the second inter-layer condition, and cuts the third layer 103 by irradiating the third layer 103 (more specifically, a part of the third layer 103 from the near-inter-layer position 103C) with the laser light L under the third condition. The second inter-layer condition is an irradiation condition in which the amount of heat input per unit time by the laser light L is less than the amount of heat input per unit time under the first condition, the second condition, and the third condition. That is, the amount of heat input to the base material 100 per unit time in a case where the base material 100 is irradiated with the laser light L under the second inter-layer condition is less than the amount of heat input to the base material 100 per unit time in a case where the same position on the base material 100 is irradiated with the laser light L under the first condition, the second condition, and the third condition.

Further, in the present embodiment, the amount of heat input per unit time by the laser light L is different between the first condition and the third condition. For example, in the present embodiment, since the thermal expansion coefficient of the first layer 101 is less than the thermal expansion coefficient of the third layer 103, the amount of heat input per unit time by the laser light L under the first condition may be set to be greater than the amount of heat input per unit time by the laser light L under the third condition. That is, the amount of heat input per unit time under the irradiation condition of the laser light L of a layer that has a low thermal expansion coefficient in the first layer 101 and the third layer 103 may be set to be greater than the amount of heat input per unit time under the irradiation condition of the laser light L of the layer that has a high thermal expansion coefficient. However, the present invention is not limited thereto, and the amount of heat input per unit time by the laser light L under the first condition may be less than the amount of heat input of the third condition, and may be equal to the amount of heat input per unit time under the first condition and the third condition.

Further, in the present embodiment, the amount of heat input per unit time by the laser light L is different between the second condition and the third condition. In the present embodiment, since the thermal expansion coefficient of the second layer 102 is greater than the thermal expansion coefficient of the third layer 103, the second condition is set such that the amount of heat input of the laser light L is less than the amount of heat input under the third condition. That is, in the present embodiment, it can be said that the irradiation conditions of the laser light L to each layer are set such that the amount of heat input of the laser light L is smaller as the layer has a smaller thermal expansion coefficient. However, the second condition is not limited to the setting such that the amount of heat input of the laser light L is less than the amount of heat input under the third condition. For example, the second condition and the third condition may be set to irradiation conditions in which the amount of heat input of the laser light L is the same, or the second condition may be set such that the amount of heat input of the laser light L is greater than the amount of heat input under the third condition.

In the present embodiment, as shown in Fig. 3, the second layer 102 is irradiated with the laser light L under the second condition under the control of the control device 20, such that the second layer 102 is cut (step S12). The first inter-layer part 105 is irradiated with the laser light L under the first inter-layer condition, such that the first inter-layer part 105 is cut (step S14). The first layer 101 is irradiated with the laser light L under the first condition, such that the first layer 101 is cut (step S16). The second inter-layer part 106 is irradiated with the laser light L under the second inter-layer condition, such that the second inter-layer part 106 is cut (step S18). The third layer 103 is irradiated with the laser light L under the third condition, such that the third layer 103 is cut (step S19).

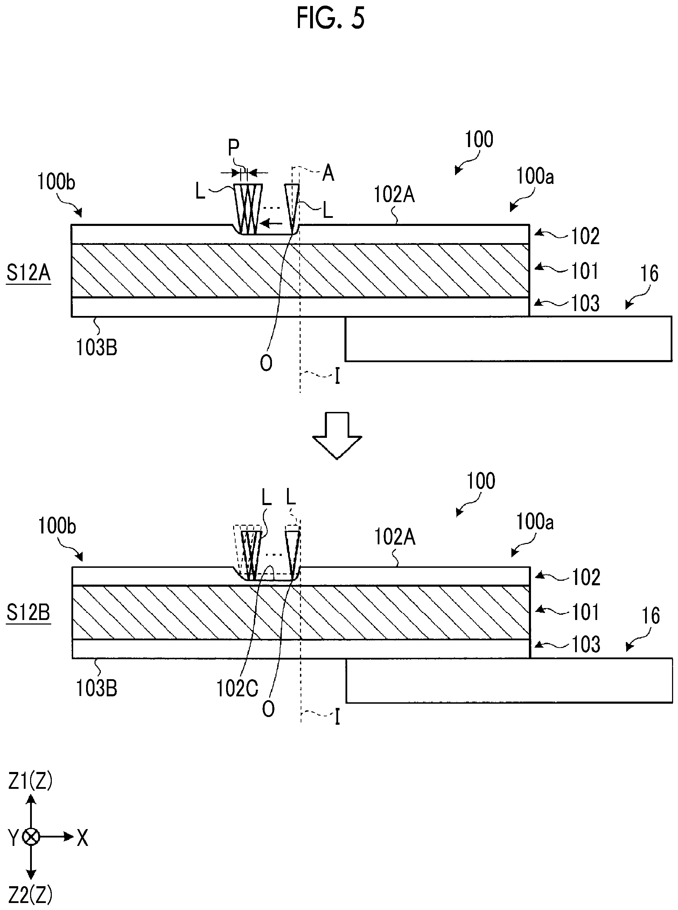

Fig. 5 shows an example in which the second layer 102 is cut, that is, an example of the detailed contents of step S12 in Fig. 3. As shown in Fig. 5, the control device 20 illuminates the laser light L under the second condition from a surface 102A of the second layer 102 to a near-inter-layer position 102C, and removes (cuts) a part from the surface 102A of the second layer 102 to the near-inter-layer position 102C thereof. The near-inter-layer position 102C is the position of the second layer 102 between the surface 102A and a surface 102B in the Z direction. Further, it is preferable that the near-inter-layer position 102C is a part of the second layer 102 in the vicinity of the inter-layer (surface 102B) between the second layer 102 and the first layer 101. In other words, it is preferable that a distance between the near-inter-layer position 102C and the surface 102B in the Z direction is shorter than a distance between the near-inter-layer position 102C and the surface 102A in the Z direction. For example, the distance between the near-inter-layer position 102C and the surface 102B in the Z direction is preferably 0.2 mm or more and 1.0 mm or less.

Specifically, as shown in step S12A of Fig. 5, the control device 20 sets a plurality of processing paths on the second layer 102. The processing path refers to the locus of the laser light L to illuminate the base material 100, in other words, the laser light L is illuminated on the processing path. The plurality of processing paths are set to be arranged in the X direction (width direction) orthogonal to the Y direction which is the scanning direction and the Z direction which is the lay-up direction (depth direction). Specifically, the plurality of processing paths are set to be arranged in the X direction with a predetermined pitch interval P from the processing line I side to the remaining portion 100b side with the processing line I side set as a reference. Further, as shown in Fig. 5, in the laser light L, a focal point O is located inside the base material 100 (here, the second layer 102), and an optical axis A of the laser light L is along the Z direction. Hereinafter, the plurality of processing paths which are set to be arranged in the X direction will be appropriately described as a group of processing paths.

The control device 20 irradiates each processing path of the group of processing paths, which are set on the second layer 102 in such a manner, with the laser light L under the second condition, thereby irradiating the second layer 102 on the processing path with the laser light L under the second condition. The control device 20 sequentially illuminates the laser light L from the processing path on the processing line I side toward the processing path on the remaining portion 100b side. That is, the control device 20 illuminates the laser light L while scanning the laser light L in the Y direction in a state where the irradiation position of the laser light L in the X direction is fixed on the processing path on the side closest to the processing line I. Thereby, the laser light L is illuminated onto the second layer 102 along the processing path on the side closest to the processing line I, and the part overlapping the processing path of the second layer 102 is removed. Then, the control device 20 illuminates the laser light L while scanning the laser light L in the Y direction by controlling, for example, the support table 16 to move the base material 100 to the processing line I side and thereby moving the irradiation position of the laser light L to the remaining portion 100b side in the X direction. Thereby, the laser light L is illuminated onto the second layer 102 along the processing path, and the part overlapping the processing path of the second layer 102 is removed. The control device 20 repeats the same control at the transition, and irradiates each processing path of the group of processing paths with the laser light L. Thereby, the second layer 102 is removed by a predetermined thickness over a group of processing paths.

After the irradiation of the laser light L to the group of processing paths is completed, as shown in step S12B, the control device 20 sets the next group of processing paths on the Z2 direction side, and irradiates each processing path of the group of processing paths with the laser light L under the second condition. That is, a new group of processing paths is set on the Z2 direction side of the previously set group of processing paths, and the new group of processing paths is irradiated with the laser light L. The focal point O of the laser light L illuminated toward the new group of processing paths will be located on the Z2 direction side with respect to the focal point O of the laser light L illuminated toward the previous group of processing paths. Thereby, a part of the second layer 102 overlapping with the new processing path is further removed by the predetermined thickness. The number of processing paths in a group is set to be less than the number of processing paths in the previous group. That is, the number of processing paths on the deep side (Z2 direction side) in the thickness direction of the base material 100 is less than the number of processing paths on the shallow side. Furthermore, the position of the processing path on the side closest to the remaining portion 100b in the group of processing paths is set to be located closer to the product 100a than the position of the processing path on the side closest to the remaining portion 100b in the previous (shallow side) group of processing paths. Further, the processing path on the processing line I side is set to be a constant position in the X direction regardless of the Z direction. By setting the processing path in such a manner, in cutting processing, in a case where the pitch interval P in each laser irradiation process is the same, the base material 100 is irradiated with the laser light L such that the cutting width in the X direction is narrowed from the front surface side (shallow side) to the rear surface side (deep side) of the base material 100.

The control device 20 repeats the laser irradiation step, that is, a step of illuminating the laser light L for each group of processing paths to remove the second layer 102 by the predetermined thickness. Thereby, as shown in step S12B of Fig. 5, a part overlapping the processing path of the second layer 102 is removed from the surface 102A to the near-inter-layer position 102C, and a part from the surface 102A of the second layer 102 to the near-inter-layer position 102C is cut. By cutting the second layer 102 in such a manner, a part of the second layer 102, which overlaps with the processing path extending thereto, at the near-inter-layer position 102C is exposed to the outside. In the example of Fig. 5, setting of the group of processing paths is repeated a plurality of times, that is, removal of the second layer 102 by the predetermined thickness is repeated a plurality of times in the Z2 direction side to cut the second layer 102. The number of times a group of processing paths are set, in other words, the number of times the predetermined thickness of the second layer 102 is removed is determined on the basis of the second condition and a thickness from the surface 102A to the near-inter-layer position 102C, and may be one time or a plurality of times.

Fig. 6 shows an example in which the first inter-layer part 105 is cut, that is, an example of the detailed contents of step S14 in Fig. 3. As shown in Fig. 5, the control device 20 irradiates the first inter-layer part 105 with the laser light L under the first inter-layer condition, thereby removing (cutting) the first inter-layer part 105. The first inter-layer part 105 is a part from the near-inter-layer position 102C of the second layer 102 to the near-inter-layer position 101C of the first layer 101 through an inter-layer between the second layer 102 and the first layer 101. It can be said that the inter-layer between the second layer 102 and the first layer 101 is a part in which the surface 102B of the second layer 102 and the surface 101A of the first layer 101 are in contact with each other. Further, the near-inter-layer position 101C is a position of the first layer 101 between the surface 101A and the surface 101B in the Z direction. Furthermore, it is preferable that the near-inter-layer position 101C is a part of the first layer 101 in the vicinity of the inter-layer (surface 101A) between the first layer 101 and the second layer 102. In other words, it is preferable that a distance between the near-inter-layer position 101C and the surface 101A in the Z direction is shorter than a distance between the near-inter-layer position 101C and the surface 101B in the Z direction. For example, the distance between the near-inter-layer position 101C and the surface 101A in the Z direction is preferably 0.2 mm or more and 1.0 mm or less. The first inter-layer part 105 is a part which includes a part extending from the near-inter-layer position 102C of the second layer 102 to the surface 102B of the second layer 102 and a part extending from the surface 101A of the first layer 101 to the near-inter-layer position 101C.

On the basis of the thickness of the second layer 102, the second condition, and the like, the control device 20 calculates, in advance, the number of times a group of processing paths necessary for cutting the part from the surface 102A of the second layer 102 to the near-inter-layer position 102C. Then, in a case where the irradiation of the laser light L to the group of processing paths for the set number of times is completed, the control device 20 determines that the cutting to the near-inter-layer position 102C is completed, and the current processing proceeds to the cutting processing of the first inter-layer part 105. As shown in step S14A of Fig. 6, in a case where it is determined that the cutting to the near-inter-layer position 102C is completed, the control device 20 sets a group of processing paths on the near-inter-layer position 102C of the first inter-layer part 105. Thereby, the laser light L is illuminated along each processing path under the first inter-layer condition. Thereby, the part of the first inter-layer part 105 overlapping with the processing path is removed by the predetermined thickness. After the irradiation of the laser light L to the group of processing paths is completed, the control device 20 sets the next group of processing paths on the Z2 direction side, and irradiates each processing path of the group of processing paths with the laser light L under the first inter-layer condition. Thereby, the part of the first inter-layer part 105 overlapping with the next processing path is removed by the predetermined thickness. The control device 20 repeats the step, that is, a step of illuminating the laser light L for each group of processing paths to remove the first inter-layer part 105 by the predetermined thickness. Thereby, as shown in steps S14B and S14C of Fig. 6, by removing the part overlapping the processing path from the near-inter-layer position 102C to the near-inter-layer position 101C of the first layer 101 through the inter-layer between the second layer 102 and the first layer 101, the first inter-layer part 105 is cut. By cutting the first inter-layer part 105 in such a manner, a part of the first layer 101, which overlaps with the processing path extending thereto, at the near-inter-layer position 101C is exposed to the outside. The method of setting the processing path on the first inter-layer part 105 and the method of irradiating the processing path with the laser light L are the same as the method in the second layer 102 except that the irradiation condition is the first inter-layer condition.

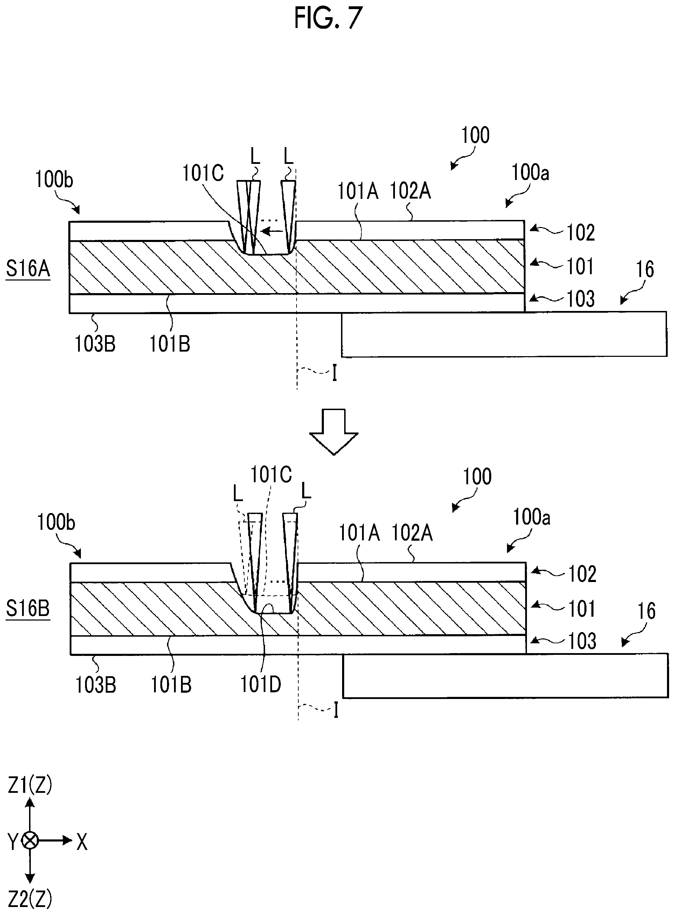

Fig. 7 shows an example in which the first layer 101 is cut, that is, an example of the detailed contents of step S16 in Fig. 3. As shown in Fig. 7, the control device 20 illuminates the laser light L under the first condition in a range from the near-inter-layer position 101C of the first layer 101 to the near-inter-layer position 101D thereof, and removes (cuts) a part from the near-inter-layer position 101C of the first layer 101 to the near-inter-layer position 101D thereof. The near-inter-layer position 101D is a position of the first layer 101 between the near-inter-layer position 101C and the surface 101B in the Z direction. Furthermore, it is preferable that the near-inter-layer position 101D is a part of the first layer 101 in the vicinity of the inter-layer (surface 101B) between the first layer 101 and the third layer 103. In other words, it is preferable that a distance between the near-inter-layer position 101D and the surface 101B in the Z direction is shorter than a distance between the near-inter-layer position 101D and the surface 101A in the Z direction. For example, the distance between the near-inter-layer position 101D and the surface 101B in the Z direction is preferably 0.2 mm or more and 1.0 mm or less.

The control device 20 calculates in advance the number of times a group of processing paths necessary for cutting the first inter-layer part 105 is set, on the basis of the thickness of the first inter-layer part 105, the first inter-layer condition, and the like. Then, in a case where the irradiation of the laser light L to the group of processing paths for the set number of times is completed, the control device 20 determines that the cutting of the first inter-layer part 105 is completed, and the current processing proceeds to the cutting processing of the first layer 101. As shown in step S16A of Fig. 7, in a case where it is determined that the cutting of the first inter-layer part 105 is completed, the control device 20 sets a group of processing paths on the near-inter-layer position 101C of the first layer 101. Thereby, the laser light L is illuminated along each processing path under the first condition. Thereby, the part overlapping the processing path of the first layer 101 is removed by the predetermined thickness. After the irradiation of the laser light L to the group of processing paths is completed, the control device 20 sets the next group of processing paths on the Z2 direction side, and irradiates each processing path of the group of processing paths with the laser light L under the first condition. Thereby, the part of the first layer 101 overlapping with the next processing path is removed by the predetermined thickness. The control device 20 repeats the step, that is, a step of illuminating the laser light L for each group of processing paths to remove the first layer 101 by the predetermined thickness. Thereby, as shown in step S16B of Fig. 7, a part overlapping the processing path of the first layer 101 is removed from the near-inter-layer position 101C to the near-inter-layer position 101D, and a part from the near-inter-layer position 101C of the first layer 101 to the near-inter-layer position 101D is cut. By cutting the first layer 101 in such a manner, a part of the first layer 101, which overlaps with the processing path extending thereto, at the near-inter-layer position 101D is exposed to the outside. The method of setting the processing path on the first layer 101 and the method of irradiating the processing path with the laser light L are the same as the method of the second layer 102, except that the irradiation condition is the first condition.

Fig. 8 shows an example in which the second inter-layer part 106 is cut, that is, an example of the detailed contents of step S18 in Fig. 3. As shown in Fig. 8, the control device 20 irradiates the second inter-layer part 106 with the laser light L under the second inter-layer condition, thereby removing (cutting) the second inter-layer part 106. The second inter-layer part 106 is a part from the near-inter-layer position 101D of the first layer 101 to the near-inter-layer position 103C of the third layer 103 through the inter-layer between the first layer 101 and the third layer 103. It can be said that the inter-layer between the first layer 101 and the third layer 103 is a part in which the surface 101B of the first layer 101 and the surface 103A of the third layer 103 are in contact with each other. Further, the near-inter-layer position 103C is a position of the third layer 103 between the surface 103A and the surface 103B in the Z direction. Furthermore, it is preferable that the near-inter-layer position 103C is a part in the third layer 103 in the vicinity of the inter-layer (surface 103A) between the third layer 103 and the first layer 101. In other words, it is preferable that the distance between the near-inter-layer position 103C and the surface 103A in the Z direction is shorter than the distance between the near-inter-layer position 103C and the surface 103B in the Z direction. For example, the distance between the near-inter-layer position 103C and the surface 103A in the Z direction is preferably 0.2 mm or more and 1.0 mm or less. The second inter-layer part 106 is a part which includes a part extending from the near-inter-layer position 101D of the first layer 101 to the surface 101B of the first layer 101 and a part extending from the surface 103A of the third layer 103 to the near-inter-layer position 103C.

On the basis of the thickness of the first layer 101, the first condition, and the like, the control device 20 calculates, in advance, the number of times a group of processing paths necessary for cutting the part from the near-inter-layer position 101C of the first layer 101 to the near-inter-layer position 101D. Then, in a case where the irradiation of the laser light L to the group of processing paths for the set number of times is completed, the control device 20 determines that the cutting to the near-inter-layer position 101D is completed, and the current processing proceeds to the cutting processing of the second inter-layer part 106. As shown in step S18A of Fig. 8, in a case where it is determined that the cutting to the near-inter-layer position 101D is completed, the control device 20 sets a group of processing paths on the near-inter-layer position 101D of the second inter-layer part 106. Thereby, the laser light L is illuminated along each processing path under the second inter-layer condition. Thereby, the part overlapping the processing path of the second inter-layer part 106 is removed by the predetermined thickness. After the irradiation of the laser light L to the group of processing paths is completed, the control device 20 sets the next group of processing paths on the Z2 direction side, and irradiates each processing path of the group of processing paths with the laser light L under the second inter-layer condition. Thereby, the part of the second inter-layer part 106 overlapping with the next processing path is removed by the predetermined thickness. The control device 20 repeats the step, that is, a step of illuminating the laser light L for each group of processing paths to remove the second inter-layer part 106 by the predetermined thickness. Thereby, as shown in steps S18B and S18C of Fig. 8, by removing the part overlapping the processing path from the near-inter-layer position 101D to the near-inter-layer position 103C of the third layer 103 through the inter-layer between the first layer 101 and the third layer 103, the second inter-layer part 106 is cut. By cutting the second inter-layer part 106 in such a manner, a part of the third layer 103, which overlaps with the processing path extending thereto, at the near-inter-layer position 103C is exposed to the outside. The method of setting the processing path on the second inter-layer part 106 and the method of irradiating the processing path with the laser light L are the same as the method in the second layer 102 except that the irradiation condition is the second inter-layer condition.

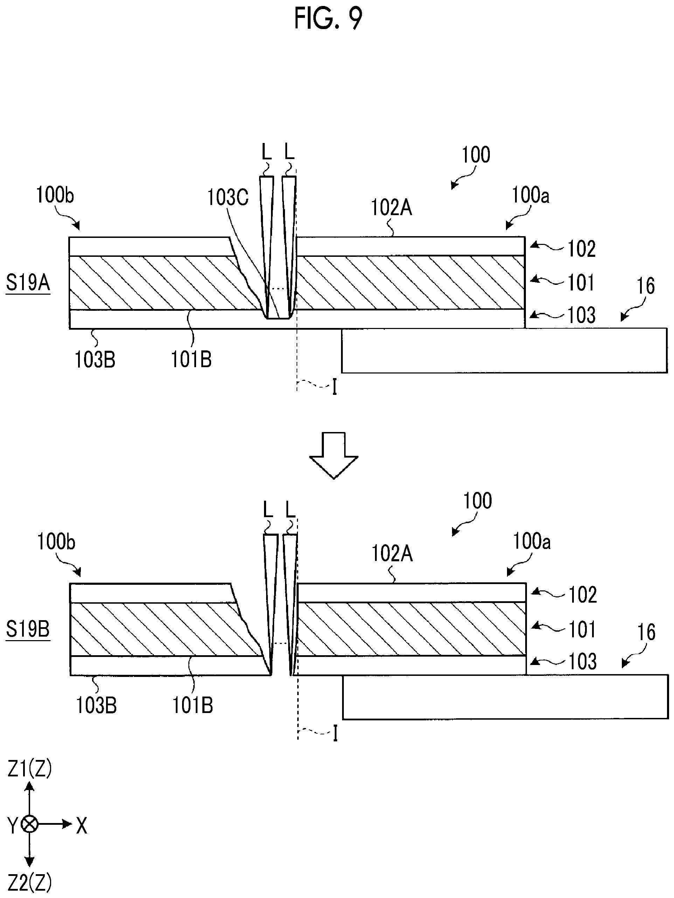

Fig. 9 shows an example in which the third layer 103 is cut, that is, an example of the detailed contents of step S19 in Fig. 3. As shown in Fig. 9, the control device 20 illuminates the laser light L under the third condition from the near-inter-layer position 103C of the third layer 103 to the surface 103B, and removes (cuts) a part from the near-inter-layer position 103C of the third layer 103 to the surface 103B thereof.

The control device 20 calculates in advance the number of times a group of processing paths necessary for cutting the second inter-layer part 106 is set, on the basis of the thickness of the second inter-layer part 106, the second inter-layer condition, and the like. Then, in a case where the irradiation of the laser light L to the group of processing paths for the set number of times is completed, the control device 20 determines that the cutting of the second inter-layer part 106 is completed, and the current processing proceeds to the cutting processing of the third layer 103. As shown in step S19A of Fig. 9, in a case where it is determined that the cutting of the second inter-layer part 106 is completed, the control device 20 sets a group of processing paths on the near-inter-layer position 103C of the third layer 103. Thereby, the laser light L is illuminated along each processing path under the third condition. Thereby, the part overlapping the processing path of the third layer 103 is removed by the predetermined thickness. After the irradiation of the laser light L to the group of processing paths is completed, the control device 20 sets the next group of processing paths on the Z2 direction side, and irradiates each processing path of the group of processing paths with the laser light L under the third condition. Thereby, the part of the third layer 103 overlapping with the next processing path is removed by the predetermined thickness. The control device 20 repeats the step, that is, a step of illuminating the laser light L for each group of processing paths to remove the third layer 103 by the predetermined thickness. Thereby, as shown in step S19B of Fig. 9, the part overlapping the processing path of the third layer 103 is removed from the near-inter-layer position 103C to the surface 103B, and the third layer 103 is cut. The method of setting the processing path on the third layer 103 and the method of irradiating the processing path with the laser light L are the same as the methods of the second layer 102 and the first layer 101, except that the irradiation condition is the third condition.

By cutting the second layer 102, the first inter-layer part 105, the first layer 101, the second inter-layer part 106, and the third layer 103 as described above, the base material 100 is cut, and the product 100a and the remaining portion 100b are cut and separated. In the product 100a which is cut out from the base material 100, the processed surface irradiated with the laser light L is formed as a surface following the processing line I.

The control device 20 determines that the cutting of the second layer 102, the first layer 101, and the like is completed in a case where the irradiation of the laser light L to the preset number of times of the processing path calculated in advance is completed. However, the method of determining that the layer cutting is completed is not limited thereto. For example, an operator may visually check the base material 100, and the operator may input the message to the control device 20 before the next layer is exposed. In a case of detecting an input by the operator, the control device 20 may determine that the cutting of one layer is completed.

Here, in a case where the base material 100 in which a plurality of layers having different materials are laminated is irradiated with the laser light L for cutting processing, the base material 100 is heated by the laser light L, and each layer of the base material 100 expands. Since each layer of the base material 100 has a different thermal expansion coefficient from each other, an amount of expansion thereof is different from each other. Since the expansion amount of the base material 100 is different for each layer, a tensile stress may be generated between the layers, and inter-layer peeling may occur. On the other hand, in the laser processing device 1 according to the present embodiment, an amount of heat input of the laser light L to the inter-layer part (here, the first inter-layer part 105) is less than an amount of heat input of the laser light L to a part inside the inter-layer (here, the first layer 101). Thereby, an amount of thermal expansion of each layer in the vicinity of the inter-layer can be suppressed, the tensile stress between the layers can be suppressed, and inter-layer peeling can be suppressed.

As described above, in the laser processing method according to the present embodiment, by illuminating the laser light L onto the first inter-layer part 105 including the part between the first layer 101 and the second layer 102 having different thermal expansion coefficients so as to decrease the amount of heat input, the amount of thermal expansion between the layers of the second layer 102 and the first layer 101 is suppressed, and the tensile stress between the layers is suppressed. Thereby, the base material 100 can be appropriately cut while the inter-layer peeling is suppressed. Further, by making the amount of heat input to the first layer 101 greater than the amount of heat input to the first inter-layer part 105, it is possible to process the first layer 101 having a low amount of thermal expansion at a high speed.

Further, the laser processing device 1 according to the present embodiment appropriately irradiates the first inter-layer part 105 with the laser light L so as to decrease the amount of heat input, thereby appropriately cutting the base material 100 while suppressing inter-layer peeling.

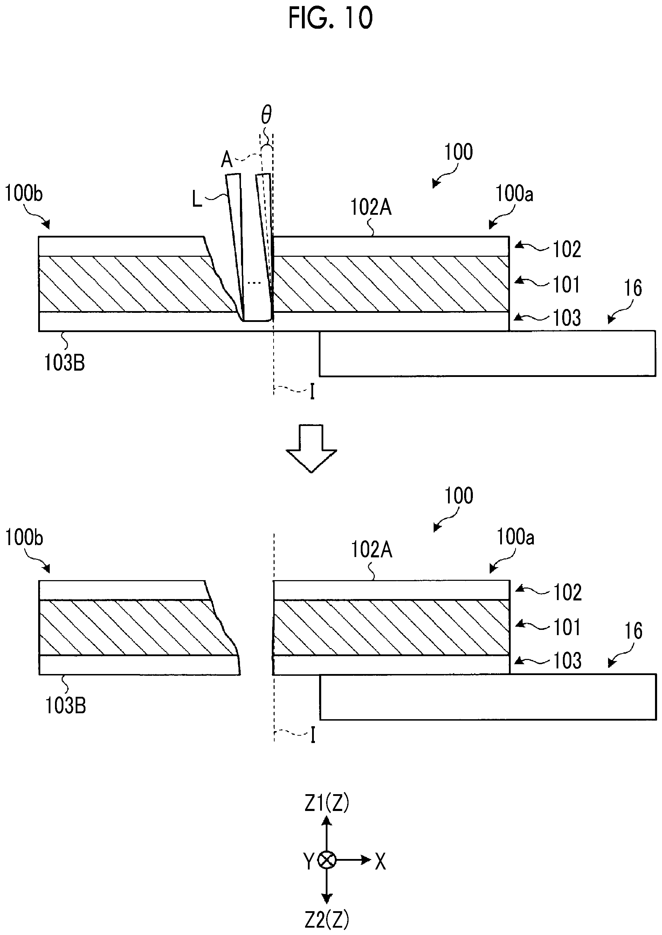

Fig. 10 is a schematic diagram showing another example of the laser processing method according to the first embodiment. As shown in Fig. 10, the laser processing device 1 may irradiate the base material 100 with the laser light L while tilting the optical axis A of the laser light L with respect to the Z direction, which is the lay-up direction. It is preferable that the laser processing device 1 irradiates the base material 100 with the laser light L so as to tilt the optical axis A of the laser light L toward the remaining portion 100b with respect to the Z direction in the X direction. More specifically, the laser light L is condensed at a predetermined angle θ with respect to the optical axis A. Then, the optical axis A of the laser light L is tilted with respect to the processing line I along the Z direction. That is, the laser light L sets the tilt angle of the optical axis A with respect to the processing line I along the Z direction in consideration of the predetermined angle θ to be condensed. The tilt angle is set in a range of 0.1 or more and 5° or less, preferably in a range of 0.1 or more and 2° or less, and more preferably in a range of 0.1 or more and 1° or less. In such a manner, by tilting the irradiation direction (optical axis A) of the laser light L with respect to the processing line I along the Z direction, the tilt of the processed surface with respect to the processing line I is suppressed, and a processed surface along the processing line I can be made.

In the present embodiment, the irradiation condition of the laser light L from the surface 102A of the second layer 102 to the near-inter-layer position 102C is set as the second condition in which the amount of heat input is greater than the first inter-layer condition. However, the irradiation condition of the laser light L from the surface 102A of the second layer 102 to the near-inter-layer position 102C may be set to the first inter-layer condition in the same manner as the first inter-layer part 105. That is, in such a case, the laser light L is illuminated under the first inter-layer condition from the surface 102A of the second layer 102 to the near-inter-layer position 101C of the first layer 101 through the inter-layer between the second layer 102 and the first layer 101. As described above, the laser processing method according to the present embodiment may include a step of cutting the second layer 102 by irradiating a part of the second layer 102 from the surface 102A to the near-inter-layer position 102C with the laser light L under the first inter-layer condition. By illuminating the laser light L under the first inter-layer condition from the second layer 102 to the first inter-layer part 105 in such a manner, for example, in a case where the second layer 102 is thinly formed, by suppressing the amount of heat input to the inter-layer part between the first layer 101 and the second layer 102, it is possible to more appropriately the inter-layer peeling. Also in the following embodiments, the laser light L may be illuminated from the second layer 102 to the first inter-layer part 105 under the first inter-layer condition.

Further, in the present embodiment, the irradiation condition of the laser light L from the near-inter-layer position 103C of the third layer 103 to the surface 103B is set as the third condition in which the amount of heat input is greater than the second inter-layer condition. However, the irradiation condition of the laser light L from the near-inter-layer position 103C of the third layer 103 to the surface 103B may be set to the second inter-layer condition in the same manner as the second inter-layer part 106. That is, In such a case, the laser light L is illuminated under the second inter-layer condition from the near-inter-layer position 101D of the first layer 101 to the surface 103B of the third layer 103 through the inter-layer between the first layer 101 and the third layer 103. As described above, the laser processing method according to the present embodiment may include a step of cutting the third layer 103 by irradiating a part of the third layer 103 from the near-inter-layer position 103C to the surface 103B with the laser light L under the second inter-layer condition. By illuminating the laser light L under the first inter-layer condition from the second inter-layer part 106 to the third layer 103 in such a manner, for example, in a case where the third layer 103 is thinly formed, by suppressing the amount of heat input to the inter-layer part between the first layer 101 and the third layer 103, it is possible to more appropriately the inter-layer peeling. Also in the following embodiments, the laser light L may be illuminated from the second inter-layer part 106 to the third layer 103 under the second inter-layer condition.

### (Second Embodiment)

Next, a second embodiment will be described. The second embodiment is different from the first embodiment in that, in a case where the first inter-layer part 105 is irradiated with the laser light, the laser light L is illuminated onto the processing path on the remaining portion 100b side of the processing path along the processing line I under the second condition. The description of the parts having the same configuration as that of the first embodiment in the second embodiment will not be repeated.

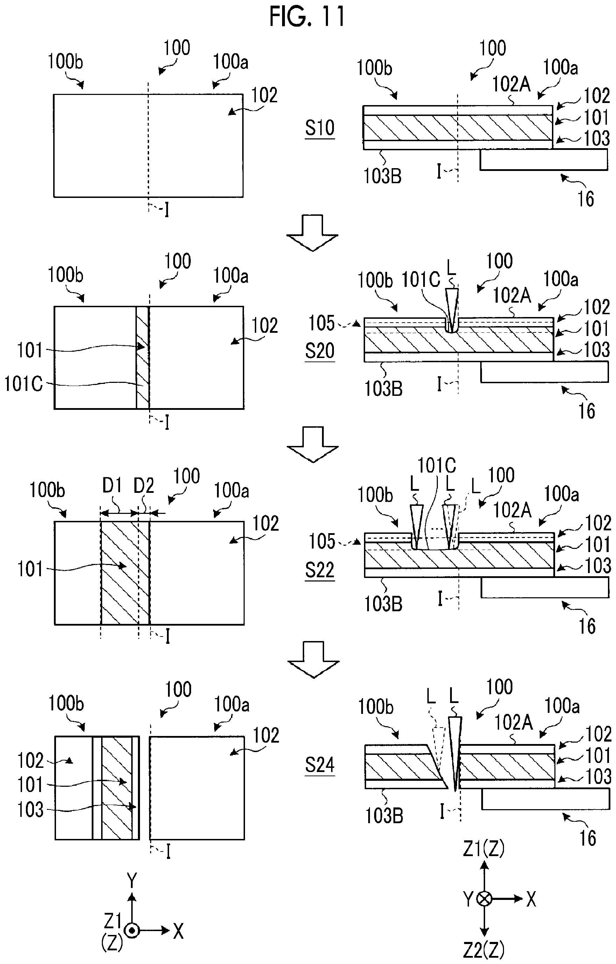

Fig. 11 is a schematic diagram showing a laser processing method according to the second embodiment. As shown in step S10 of Fig. 11, in the second embodiment as well, the base material 100 is fixed onto the support table 16 such that the second layer 102 is located on the Z1 direction side as in the first embodiment. Then, as shown in step S20, the control device 20 sets a processing path at a position along the processing line I on the second layer 102. Hereinafter, the processing path set along the processing line I will be referred to as a line processing path. The control device 20 irradiates the line processing path with the laser light L under the first inter-layer condition and irradiates the second layer 102 (more specifically, the part of the second layer 102 to the near-inter-layer position 102C) overlapping the line processing path and the first inter-layer part 105 with the laser light L under the first inter-layer condition, thereby removing parts of the second layer 102 and the first inter-layer part 105 overlapping with the line processing path. Thereby, the part of the first layer 101 overlapping with the line processing path of the near-inter-layer position 101C is exposed. Furthermore, by removing the second layer 102 and the first inter-layer part 105 overlapping with the line processing path, the second layer 102 and the first inter-layer part 105 on the product 100a side and the second layer 102 and the first inter-layer part 105 on the remaining portion 100b side are separated by the line processing path.

A plurality of line processing paths may be set in the Z direction. In such a case, the control device 20 irradiates the first line processing path with the laser light L, and then irradiates the line processing path set on the Z2 direction side with respect to the line processing path with the laser light L, thereby removing parts of the second layer 102 and the first inter-layer part 105 overlapping with the line processing path stepwise by one predetermined thickness interval at a time. Further, a plurality of line processing paths may be set in the X direction. In such a case, as in the first embodiment, the control device 20 irradiates the line processing path along the processing line I with the laser light L, and then irradiates the line processing path closer to the remaining portion 100b side than the line processing path with the laser light L.

In a case where the line processing path is irradiated with the laser light L under the second condition, as shown in step S22 of Fig. 11, a group of processing paths is set on the second layer 102 and the first inter-layer part 105 on the remaining portion 100b side in the X direction from the line processing path. The control device 20 irradiates the group of processing paths on the second layer 102 and the first inter-layer part 105 with the laser light L under the second condition, thereby removing parts of the second layer 102 and the first inter-layer part 105 overlapping with the group of the processing paths, that is, parts of the second layer 102 and the first inter-layer part 105 closer to the remaining portion 100b side than the line processing path. Here, a length of the region to be irradiated with the laser light L under the second condition in the X direction is defined as a length D1, and a length of the region to be irradiated with the laser light L under the first inter-layer condition in the X direction is defined as a length D2. The length D1 can be said to be the length in the entire X direction of a group of processing paths irradiated with the laser light L under the first condition, and the length D2 can be said to be the length of the entire line processing path in the X direction. In such a case, the length D1 is set to be longer than the length D2.

In a case of removing the parts of the second layer 102 and the first inter-layer part 105 closer to the remaining portion 100b side than the line processing path, as shown in step S24 of Fig. 11, a processing path is set on the first layer 101 in the same manner as in the first embodiment and the laser light L is illuminated thereon to remove the first layer 101, a processing path is set on the second inter-layer part 106 in the same manner as in the first embodiment and the laser light L is illuminated thereon to remove the first layer 101, and a processing path is set on the third layer 103 in the same manner as in the first embodiment and the laser light L is illuminated thereon to remove the third layer 103. However, the second embodiment is different from the first embodiment in that the second inter-layer part 106 is irradiated with the laser light L under the first condition or the third condition.

As described above, in the second embodiment, the parts of the second layer 102 and the first inter-layer part 105 overlapping the line processing path are irradiated with the laser light L under the first inter-layer condition, and the part closer to the remaining portion 100b side than the line processing path is irradiated with the laser light L under the second condition. By removing the parts of the second layer 102 and the first inter-layer part 105 overlapping with the line processing path, the product 100a side of the second layer 102 and the first inter-layer part 105 is separated from the remaining portion 100b side. Therefore, even in a case where the remaining portion 100b side is irradiated with the laser light L under the first condition, the heat input to the second layer 102 and the first inter-layer part 105 of the product 100a is suppressed. As a result, the inter-layer peeling of the product 100a can be suppressed.

As described above, in the laser processing method according to the second embodiment, by irradiating the part extending along the processing line I (line processing path) with a laser under the first inter-layer condition, it is possible to appropriately cut the base material 100 while suppressing the inter-layer peeling on the product 100a side. Further, by irradiating the remaining portion 100b from the line processing path with the laser under the second condition, the processing under the first inter-layer condition where the amount of heat input is small is restricted to the part extending along the processing line I (line processing path). Thereby, it is possible to prevent the processing time from becoming long.

### (Third Embodiment)

Next, a third embodiment will be described. The third embodiment is different from the first embodiment in that after the second layer 102 is irradiated with the laser light L, the base material 100 is turned over and the third layer 103 is irradiated with the laser light L. Description of the third embodiment having the same configuration as that of the first embodiment will not be repeated. The third embodiment can also be applied to the second embodiment.

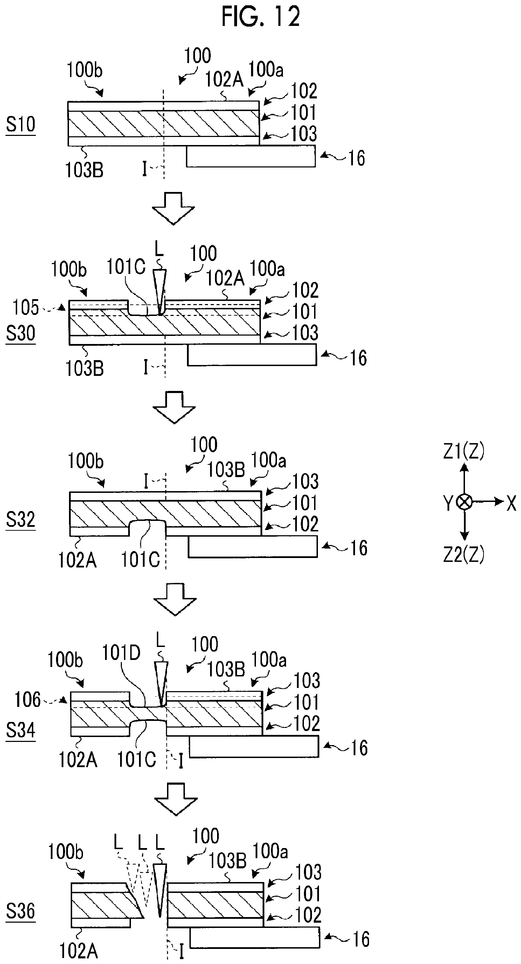

Fig. 12 is a schematic diagram showing a laser processing method according to the third embodiment. As shown in step S10 of Fig. 12, in the third embodiment as well, the base material 100 is fixed onto the support table 16 such that the second layer 102 is located on the Z1 direction side as in the first embodiment. Then, as shown in step S30 of Fig. 12, in the third embodiment as well, in the same manner as the first embodiment, the control device 20 sets a processing path on the second layer 102 and irradiates the processing path with the laser light L under the second condition, thereby removing the second layer 102 (more specifically, the part of the second layer 102 to the near-inter-layer position 102C). Then, the control device 20 sets a processing path on the first inter-layer part 105 and irradiates the processing path with the laser light L under the first inter-layer condition, thereby removing the first inter-layer part 105. Thereby, a part of the first layer 101 overlapping with the processing path at the near-inter-layer position 101C is exposed to the outside. In a case of removing the second layer 102 and the first inter-layer part 105, as shown in step S32 of Fig. 12, the base material 100 is detached from the support table 16, and the base material 100 is turned upside down and fixed to the support table 16 again. Specifically, the base material 100 is fixed onto the support table 16 such that the third layer 103 of the base material 100 is located on the Z1 direction side, in other words, such that the third layer 103 is located on the side irradiated with the laser light L. That is, the base material 100 is fixed onto the support table 16 such that the second layer 102, the first layer 101, and the third layer 103 are arranged in this order in the Z1 direction.

Next, in the third embodiment, as shown in step S34 of Fig. 12, a processing path is set on the third layer 103, and the processing path is irradiated with the laser light L under the third condition. Thereby, the third layer 103 (more specifically, the part of the third layer 103 to the near-inter-layer position 103C) is removed. Then, the control device 20 sets a processing path on the second inter-layer part 106 and irradiates the processing path with the laser light L under the second inter-layer condition, thereby removing the second inter-layer part 106. Thereby, a part of the first layer 101 overlapping with the processing path at the near-inter-layer position 101D is exposed to the outside. In a case of removing the third layer 103 and the second inter-layer part 106, as shown in step S36 of Fig. 12, a processing path is set on the first layer 101, and the processing path is irradiated with the laser light L under the first condition. Thereby, the first layer 101 is removed. Thereby, the second layer 102, the third layer 103, and the first layer 101 are removed in this order, and thereby the base material 100 is cut.

As described above, in the laser processing method according to the third embodiment, by disposing the third layer 103 on the side irradiated with the laser light L and performing cutting processing, a boundary between the third layer 103 and the first layer 101 can be easily visually recognized, and the third layer 103 and the first layer 101 can be cut under appropriate laser irradiation conditions suitable for each. Further, for example, in a case where the laser irradiation conditions are the same for the second layer 102 and the third layer 103, it is preferable that the second layer 102 and the third layer 103 are cut under the same laser irradiation conditions and are then processed under the laser irradiation condition of the first layer 101. In such a case, since the laser irradiation condition can be changed only once, the cutting processing can be facilitated.

### (Fourth Embodiment)

Next, a fourth embodiment will be described. The fourth embodiment is different from the first embodiment in that the cutting processing is performed while supplying the cooling medium F to the surface of the base material 100 on the Z2 direction side. Description of the fourth embodiment having the same configuration as that of the first embodiment will not be repeated. The fourth embodiment can also be applied to the second embodiment.

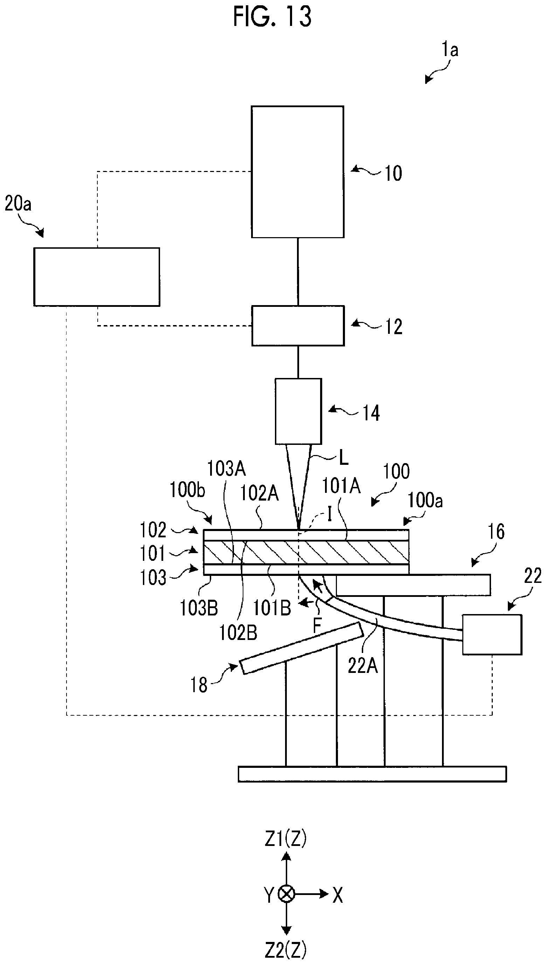

Fig. 13 is a diagram schematically showing a laser processing device according to the fourth embodiment. As shown in Fig. 13, the laser processing device 1a according to the fourth embodiment includes a control device 20a and a cooling device 22 as a cooling part. The cooling device 22 is a device which supplies a cooling medium F from the supply port 22A. The cooling medium F is a gas, and may be, for example, air, low-temperature carbon dioxide, an inert gas such as nitrogen, or the like. However, the cooling medium F may be any medium as long as the cooling medium F is able to cool the base material 100, and may be, for example, a liquid.

The cooling device 22 is controlled by the control device 20a to discharge the cooling medium F from the supply port 22A. The supply port 22A is provided on the Z2 direction side of the support table 16 at a position where the supply port 22A faces the surface 103A of the base material 100 fixed onto the support table 16 on the Z2 direction side. Furthermore, the supply port 22A is open toward the remaining portion 100b on the product 100a side of the base material 100 fixed to the support table 16 in the X direction. Therefore, the cooling medium F discharged from the supply port 22A reaches the surface 103A on the product 100a side of the base material 100 and flows along the surface 103A from the product 100a side toward the remaining portion 100b side in the X direction.

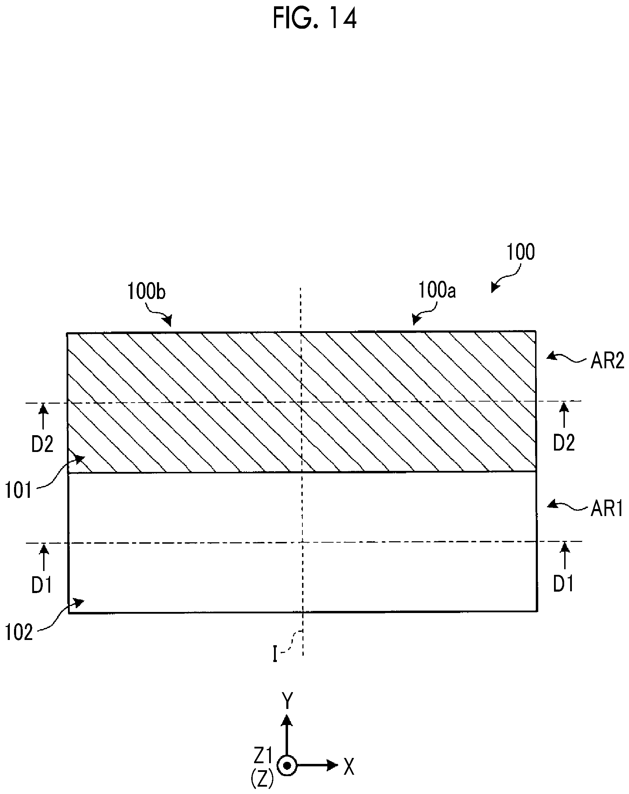

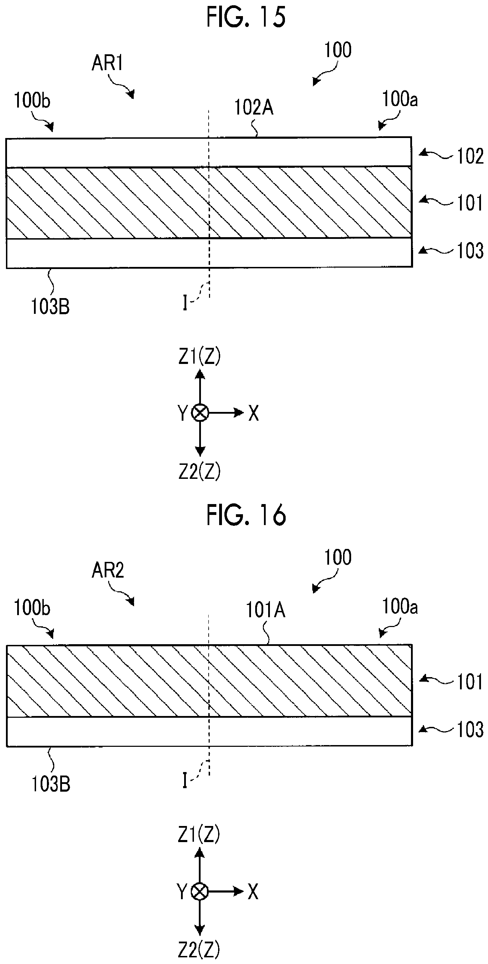

Figs. 14 to 16 are schematic diagrams showing an example of the base material according to the fourth embodiment. As shown in Fig. 14, the base material 100 according to the fourth embodiment includes a region AR1 where the second layer 102 is laminated and a region AR2 where the second layer 102 is not laminated. In the example of Fig. 14, the regions AR1 and AR2 are adjacent to each other in the Y direction. Fig. 15 is a cross-sectional view taken along a line D1-D1 of Fig. 14, showing a cross-sectional view of the base material 100 in the region AR1. Fig. 16 is a cross-sectional view taken along a line D2-D2 of Fig. 14, showing a cross-sectional view of the base material 100 in the region AR2. As shown in Figs. 14 and 15, in the base material 100, the third layer 103, the first layer 101, and the second layer 102 are laminated in this order in the region AR1. On the other hand, as shown in Figs. 14 and 16, regarding the base material 100, in the region AR2, the third layer 103 and the first layer 101 are laminated in this order, and the second layer 102 is not laminated. That is, in the base material 100, the third layer 103 and the first layer 101 are laminated from the region AR1 to the region AR2. In contrast, the second layer 102 is laminated only on the region AR1.

The base material 100 according to the fourth embodiment is, for example, a member for an aircraft, and the region AR2 is used as a tip portion of a main wing, and the region AR1 is used as a part on the tip side from the tip of the main wing. However, the use of the base material 100 according to the fourth embodiment is not limited thereto, and is optional. Further, the base material 100 in the fourth embodiment is not limited to the lay-up structure described with reference to Figs. 14 to 16, and may have the same lay-up structure as that in the first embodiment. For example, in the base material 100 in the fourth embodiment, the third layer 103, the first layer 101, and the second layer 102 may be laminated over the entire area. Alternatively, the third layer 103 and the first layer 101 may be laminated over the entire area, and the second layer 102 does not have to be laminated.

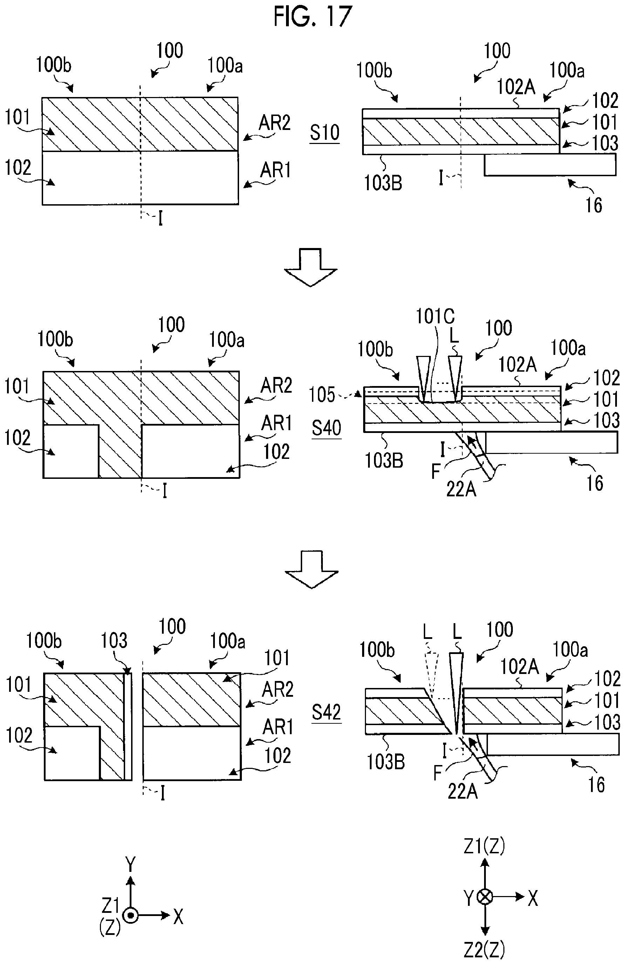

Fig. 17 is a schematic diagram showing a laser processing method according to the fourth embodiment. As shown in step S10 of Fig. 17, in the fourth embodiment, the base material 100 is fixed onto the support table 16 such that the second layer 102 of the region AR1 is located on the Z1 direction side, that is, such that the third layer 103, the first layer 101, and the second layer 102 are arranged in this order toward the Z1 direction. Therefore, the third layer 103 is disposed on a side opposite to the side irradiated with the laser light L, that is, on the Z2 direction side. At least a part of the surface 103B of the third layer 103 on the product 100a side is not covered by the support table 16 and is exposed. The surface 103B of the third layer 103 faces toward the supply port 22A of the cooling device 22. Then, as shown in step S40 of Fig. 17, the control device 20 sets a processing path on the second layer 102 of the region AR1 and irradiates the processing path with the laser light L under the second condition, thereby removing the second layer 102 of the region AR1 (more specifically, the part of the second layer 102 to the near-inter-layer position 102C). Then, the control device 20 sets a processing path on the first inter-layer part 105 and irradiates the processing path with the laser light L under the first inter-layer condition, thereby removing the first inter-layer part 105. At this time, the control device 20 supplies the cooling medium F from the supply port 22A of the cooling device 22 toward the surface 103B of the third layer 103 while irradiating the second layer 102 and the first inter-layer part 105 of the region AR1 with the laser light L. Thereby, the second layer 102 and the first inter-layer part 105 can be removed while the third layer 103 is cooled by the cooling medium F. Since the second layer 102 is not formed in the region AR2 of the base material 100, the laser light L under the second condition is not illuminated.

In a case where the cutting of the second layer 102 and the first inter-layer part 105 of the region AR1 is completed, as shown in step S42 of Fig. 17, the control device 20 sets a processing path on the near-inter-layer position 101C of the first layer 101, and irradiates the processing path with the laser light L under the first condition, thereby removing the part of the first layer 101 from the near-inter-layer position 101C. Since the first layer 101 is provided in both the region AR1 and the region AR2, the first layer 101 in both the region AR1 and the region AR2 is removed. In a case of removing the first layer 101, the control device 20 sets a processing path in the third layer 103 and irradiates the processing path with the laser light L under the first condition, thereby removing the third layer 103. Since the third layer 103 is also provided in both the region AR1 and the region AR2, the third layer 103 in both the region AR1 and the region AR2 is removed. Thereby, the cutting of the base material 100 is completed. Even while the first layer 101 and the third layer 103 are being irradiated with the laser light L, the cooling medium F is supplied from the supply port 22A of the cooling device 22 toward the surface 103B of the third layer 103. Thereby, the first layer 101 and the third layer 103 can be removed while the third layer 103 is cooled. In the fourth embodiment, the heating of the inter-layer between the first layer 101 and the third layer 103 is suppressed by cooling the third layer 103. Therefore, in the fourth embodiment, without using the second inter-layer condition in the second inter-layer part 106, the entirety from the near-inter-layer position 101C of the first layer 101 may be irradiated with the laser light L under the first condition, and the entirety of the third layer 103 may be irradiated with the laser light L under the third condition.

As described above, the laser processing device 1a according to the fourth embodiment performs cutting processing by irradiation with the laser light L while supplying the cooling medium F to the third layer 103 to cool the third layer 103. Therefore, in the laser processing device 1a according to the fourth embodiment, by cooling the third layer 103 having a high thermal expansion coefficient, without setting the irradiation conditions for irradiating the inter-layer between the first layer 101 and the third layer 103 with the laser light L as the condition that the amount of heat input is small, thermal expansion of the inter-layer can be suppressed, and peeling between the first layer 101 and the third layer 103 can be suppressed. However, also in the third embodiment, as in the first embodiment, the cooling medium F may be supplied to the third layer 103 while irradiating the second inter-layer part 106 with the laser light L under the second inter-layer condition.

As described above, in the base material 100 of the fourth embodiment, in the region AR1, a third layer 103 having a thermal expansion coefficient different from a thermal expansion coefficient of the first layer 101 is formed on the other surface 101B of the first layer 101. In the laser processing method of the fourth embodiment, in a case where the first layer 101 and the second layer 102 are cut, the cooling medium F is supplied to the third layer 103 to cool the third layer 103. In a case where the first layer 101, the second layer 102, and the third layer 103 are laminated on an entire area of the base material 100, such a laser processing method may be executed in the entire area. In the laser processing method according to the fourth embodiment, by performing cutting processing while cooling the third layer 103 having a high thermal expansion coefficient, the thermal expansion of the third layer 103 can be suppressed and peeling of the third layer 103 can be suppressed.

In the laser processing method of the fourth embodiment, in the region AR2, the base material 100, which includes the first layer 101 and the third layer 103 (second layer) laminated on the surfaces of the first layer 101 and having a thermal expansion coefficient different from a thermal expansion coefficient of the first layer 101, is irradiated with the laser light L. As a result, cutting processing is performed to cut the base material 100. The laser processing method includes: a step of disposing the third layer 103 on the side opposite to the side irradiated with the laser light L; a step of cutting the first layer 101 by irradiating the first layer 101 with the laser light L while supplying the cooling medium F to the third layer 103 to cool the third layer 103; and a step of cutting the third layer 103 by irradiating the third layer 103 with the laser light L after cutting the first layer 101. In a case where the first layer 101 and the third layer 103 are laminated on the entire area of the base material 100 and the second layer 102 is not laminated, such a laser processing method may be executed in the entire area. In the laser processing method according to the fourth embodiment, by performing cutting processing while cooling the third layer 103 having a high thermal expansion coefficient, the thermal expansion of the third layer 103 can be suppressed and peeling of the third layer 103 can be suppressed.

In the laser processing device 1a according to the fourth embodiment, by performing cutting processing while cooling the third layer 103 having a high thermal expansion coefficient, the thermal expansion of the third layer 103 can be suppressed and peeling of the third layer 103 can be suppressed.

The laser processing device 1a causes the cooling medium F to flow from the product 100a side toward the remaining portion 100b side on the surface 103A. Thereby, the laser processing device 1a is able to appropriately cool the product 100a and suppress inter-layer peeling.

As described above, in the laser processing method according to the present embodiment, the base material 100, which includes the first layer 101 and the second layer 102 laminated on the surface 101A of the first layer 101 and having a thermal expansion coefficient different from a thermal expansion coefficient of the first layer 101, is irradiated with the laser light L. As a result, cutting processing is performed to cut the base material 100. The laser processing method includes a step of cutting the first inter-layer part 105 by irradiating the first inter-layer part 105 with laser light L under predetermined first inter-layer conditions. The first inter-layer part 105 is a part which extends from the near-inter-layer position 102C inside the surface 102A in the lay-up direction (Z direction) of the second layer 102 to the near-inter-layer position 101C inside the surface 101A in the lay-up direction (Z direction) of the first layer 101 through the inter-layer between the second layer 102 and the first layer 101. Then, the laser processing method includes a step of cutting the first layer 101 by irradiating the inside part of the first layer 101 from the near-inter-layer position 101C in the lay-up direction (Z direction) under the first condition with the laser light L. The first inter-layer condition is a condition in which the amount of heat input by the laser light L is less than the amount of heat input under the first condition. In the laser processing method according to the present embodiment, by illuminating the laser light L onto the first inter-layer part 105 including the part between the first layer 101 and the second layer 102 having different thermal expansion coefficients so as to decrease the amount of heat input, the amount of thermal expansion between the layers of the second layer 102 and the first layer 101 is suppressed, and the tensile stress between the layers is suppressed. Thereby, the base material 100 can be appropriately cut while the inter-layer peeling is suppressed. Further, by making the amount of heat input to the first layer 101 greater than the amount of heat input to the first inter-layer part 105, it is possible to process the first layer 101 having a low amount of thermal expansion at a high speed.

In the laser processing method according to the present embodiment further includes a step of cutting the second layer 102 by irradiating a part of the second layer 102 from the surface 102A to the near-inter-layer position 102C in the lay-up direction with the laser light L under the second condition. The first inter-layer condition is a condition in which the amount of heat input by the laser light L is less than the amount of heat input of the second condition. In the laser processing method according to the present embodiment, the amount of heat input in a case of cutting the second layer 102 on the surface is made greater than the amount of heat input to the first inter-layer part 105. Thereby, it is possible to appropriately cut the base material 100 while suppressing inter-layer peeling.

The amount of heat input by the laser light L is different between the first condition and the second condition. By making the amount of heat input different for each layer that has a different thermal expansion coefficient, it is possible to appropriately cut the base material 100 while suppressing inter-layer peeling.

The laser processing method according to the present embodiment may include a step of cutting the second layer 102 by irradiating a part of the second layer 102 from the surface 102A to the near-inter-layer position 102C with the laser light L under the first inter-layer condition. By illuminating the laser light L under the first inter-layer condition from the second layer 102 to the first inter-layer part 105 in such a manner, for example, in a case where the second layer 102 is thinly formed, by suppressing the amount of heat input to the inter-layer part between the first layer 101 and the second layer 102, it is possible to more appropriately the inter-layer peeling.

The laser processing method according to the present embodiment further includes a step of setting the processing line I on the base material 100 before the cutting processing. The processing line I is a boundary between the product 100a to be cut out and the remaining portion 100b which is the base material 100 obtained after the product 100a is cut out. The laser processing method according to the second embodiment cuts the second layer 102 and the first inter-layer part 105 along the processing line I (line processing path) by irradiating the second layer 102 and the first inter-layer part 105 with the laser light L under the first inter-layer condition along the processing line I, and cuts the second layer 102 and the first inter-layer part 105 by irradiating the second layer 102 and the first inter-layer part 105 closer to the remaining portion 100b side than the processing line I (line processing path) with the laser light L under the second condition. In the laser processing method according to the second embodiment, by irradiating the part extending along the processing line I (line processing path) with a laser under the first inter-layer condition, it is possible to appropriately cut the base material 100 while suppressing the inter-layer peeling on the product 100a side. Further, by irradiating the remaining portion 100b from the line processing path with the laser under the second condition, the processing under the first inter-layer condition where the amount of heat input is small is restricted to the part extending along the processing line I (line processing path). Thereby, it is possible to prevent the processing time from becoming long.

Further, the base material 100 may have the third layer 103 having a thermal expansion coefficient different from a thermal expansion coefficient of the first layer 101 formed on the other surface 101B of the first layer 101. The laser processing method according to the present embodiment further includes a step of cutting the second inter-layer part 106. The second inter-layer part 106 is a part which extends from the near-inter-layer position 101D inside the surface 101B in the lay-up direction of the first layer 101 to the near-inter-layer position 103C inside the surface 103B of the third layer 103 through an inter-layer between the first layer 101 and the third layer 103. The second inter-layer condition is a condition in which the amount of heat input by the laser light L is less than the amount of heat input under the first condition. In the laser processing method according to the present embodiment, the amount of heat input in a case of cutting between the layers of the third layer 103 and the first layer 101 on the rear surface is reduced. Thereby, it is possible to appropriately cut the base material 100 while suppressing inter-layer peeling.

The laser processing method according to the present embodiment further includes a step of cutting the third layer 103 by irradiating the part of the third layer 103 from the near-inter-layer position 103C with the laser light L under the third condition in which the amount of heat input by the laser light L is greater than the amount of heat input under the second inter-layer condition. In the laser processing method according to the present embodiment, the amount of heat input in a case of cutting the third layer 103 on the rear surface is greater than the amount of heat input to the second inter-layer part 106. Thereby, it is possible to appropriately cut the base material 100 while suppressing inter-layer peeling.

In the laser processing method according to the present embodiment, the steps of cutting the second layer 102, the first inter-layer part 105, the first layer 101, the second inter-layer part 106, and the third layer 103 are executed in this order. In the laser processing method, by executing the cutting steps in this order, it is possible to appropriately cut the base material 100 while suppressing inter-layer peeling.

In the laser processing method according to the present embodiment, the step of cutting the second layer 102 and the first inter-layer part 105 is executed in a state where the second layer 102 is disposed on the side irradiated with the laser light L. In the laser processing method according to the present embodiment, the step of disposing the third layer 103 on the side irradiated with the laser light L and cutting the third layer 103 and the second inter-layer part 106 is executed. The laser processing method according to the present embodiment then executes a step of cutting the first layer 101 with respect to the first layer 101 exposed through cutting. As described above, in the laser processing method according to the present embodiment, after removing the second layer 102 and the first inter-layer part 105, the base material 100 is turned over, then the third layer 103 and the second inter-layer part 106 are removed, and then the first layer 101 is removed. In such a manner, by disposing the third layer 103 on the side irradiated with the laser light L and performing cutting processing, a boundary between the third layer 103 and the first layer 101 can be easily visually recognized, and the third layer 103 and the first layer 101 can be cut under appropriate laser irradiation conditions suitable for each. Further, for example, in a case where the laser irradiation conditions are the same for the second layer 102 and the third layer 103, it is preferable that the second layer 102 and the third layer 103 are cut under the same laser irradiation conditions and are then processed under the laser irradiation condition of the first layer 101. In such a case, since the laser irradiation condition can be changed only once, the cutting processing can be facilitated.

In the base material 100 of the present embodiment, the third layer 103 having a thermal expansion coefficient different from a thermal expansion coefficient of the first layer 101 is formed on the other surface 101B of the first layer 101. In the laser processing method of the present embodiment, in a case where the first layer 101 and the second layer 102 are cut, the cooling medium F is supplied to the third layer 103 to cool the third layer 103. In the laser processing method according to the present embodiment, by performing cutting processing while cooling the third layer 103 having a high thermal expansion coefficient, the thermal expansion of the third layer 103 can be suppressed and peeling of the third layer 103 can be suppressed.

Further, at least one of the output of the laser light L, the scanning speed of the laser light L, or the spot diameter of the laser light L is different between the first inter-layer condition and the first condition. In the laser processing method according to the present embodiment, the output of the laser light L, the scanning speed of the laser light L, and at least one of the spot diameters of the laser light L are different from each other. Thereby, it is possible to appropriately set the first inter-layer condition and the first condition.

In the laser processing method of the present embodiment, the base material 100, which includes a first layer 101 and a third layer 103 (second layer) laminated on the surface of the first layer 101 and having a thermal expansion coefficient different from a thermal expansion coefficient of the first layer 101, is irradiated with the laser light L. As a result, cutting processing is performed to cut the base material 100. The laser processing method includes: a step of disposing the third layer 103 on the side opposite to the side irradiated with the laser light L; a step of cutting the first layer 101 by irradiating the first layer 101 with the laser light L while supplying the cooling medium F to the third layer 103 to cool the third layer 103; and a step of cutting the third layer 103 by irradiating the third layer 103 with the laser light L after cutting the first layer 101. In the laser processing method according to the present embodiment, by performing cutting processing while cooling the third layer 103 having a high thermal expansion coefficient, the thermal expansion of the third layer 103 can be suppressed and peeling of the third layer 103 can be suppressed.

In the laser processing device 1 according to the present embodiment, the base material 100, which includes the first layer 101 and the second layer 102 laminated on the surface 101A of the first layer 101 and having a thermal expansion coefficient different from a thermal expansion coefficient of the first layer 101, is irradiated with the laser light L. As a result, cutting processing is performed to cut the base material 100. The laser processing device 1 includes a laser irradiating device 10 that irradiates the base material 100 with the laser light L, and a control device 20 that controls the operation of the laser irradiating device 10. The control device 20 cuts the first inter-layer part 105 by irradiating the first inter-layer part 105 with laser light L under predetermined first inter-layer conditions, and cuts the first layer 101 by irradiating the inside part in the lay-up direction (Z direction) from the near-inter-layer position 101C of the first layer 101 with the laser light L under the first condition. The first inter-layer condition is a condition in which the amount of heat input by the laser light L is less than the amount of heat input under the first condition. The laser processing device 1 according to the present embodiment appropriately irradiates the first inter-layer part 105 with the laser light L so as to decrease the amount of heat input, thereby appropriately cutting the base material 100 while suppressing inter-layer peeling.

In the laser processing device 1a according to the present embodiment, the base material 100, which includes a first layer 101 and a third layer 103 (second layer) laminated on the surface of the first layer 101 and having a thermal expansion coefficient different from a thermal expansion coefficient of the first layer 101, is irradiated with the laser light L. As a result, cutting processing is performed to cut the base material 100. The laser processing device 1 includes the laser irradiating device 10 that irradiates the base material 100 with the laser light L, the cooling device 22 that supplies the cooling medium F to the base material 100, and the control device 20 that controls the operations of the laser irradiating device 10 and the cooling device 22. The control device 20 cuts the first layer 101 by irradiating the first layer 101 with the laser light L while supplying the cooling medium F to the third layer 103 to cool the third layer 103, in the base material 100 in which the third layer 103 is disposed on the side opposite to the side irradiated with the laser light L. Then, after cutting the first layer 101, the control device 20 irradiates the third layer 103 with the laser light L to cut the third layer 103. In the laser processing device 1a according to the present embodiment, by performing cutting processing while cooling the third layer 103 having a high thermal expansion coefficient, the thermal expansion of the third layer 103 can be suppressed and peeling of the third layer 103 can be suppressed.

Although the embodiments of the present invention have been described above, the embodiments are not limited to the contents of the embodiments. Further, the above-mentioned components include those that can be easily assumed by those skilled in the art, and those that are substantially the same, that is, those in a so-called equivalent range. Furthermore, the components described above can be appropriately combined. Further, various omissions, replacements or modifications of the components can be made without departing from the scope of the above-mentioned embodiment.

### Reference Signs List

1: laser processing device
10: laser irradiating device (laser irradiation part)
12: scanning optical system
14: light condensing optical system
16: support table
20: control device (controller)
100: base material
100a: product
100b: remaining portion
101: first layer
102: second layer
103: third layer
105: first inter-layer part
106: second inter-layer part
L: laser light

## Claims

1. A laser processing method of performing cutting processing of cutting a base material, which includes a first layer and a second layer laminated on one surface of the first layer and having a thermal expansion coefficient different from a thermal expansion coefficient of the first layer, by irradiating the base material with laser light, the laser processing method comprising:
a step of cutting a first inter-layer part, which extends from a near-inter-layer position inward from a surface of the second layer to a near-inter-layer position inward from the one surface of the first layer through an inter-layer between the second layer and the first layer, by irradiating the first inter-layer part with the laser light under a predetermined first inter-layer condition; and
a step of cutting the first layer by irradiating a part of the first layer inward from the near-inter-layer position with the laser light under a first condition,
wherein the first inter-layer condition is a condition in which an amount of heat input by the laser light is less than an amount of heat input under the first condition.

2. The laser processing method according to claim 1, further comprising a step of cutting the second layer by irradiating a part from the surface of the second layer to the near-inter-layer position with the laser light under a second condition,
wherein the first inter-layer condition is a condition in which the amount of heat input by the laser light is less than an amount of heat input under the second condition.

3. The laser processing method according to claim 2, wherein the amount of heat input by the laser light is different between the first condition and the second condition.

4. The laser processing method according to claim 1, further comprising a step of cutting the second layer by irradiating a part from the surface of the second layer to the near-inter-layer position with the laser light under the first inter-layer condition.

5. The laser processing method according to claim 1, further comprising a step of setting, on the base material before the cutting, a processing line as a boundary between a product to be cut and a remaining portion which is the base material after the product is cut out,
wherein the second layer and the first inter-layer part are cut along the processing line by irradiating the second layer and the first inter-layer part with the laser light under the first inter-layer condition along the processing line, and
the second layer and the first inter-layer part are cut by irradiating the second layer and the first inter-layer part closer to a side of the remaining portion than the processing line with the laser light under a second condition, in which an amount of heat input by the laser light is greater than an amount of heat input under the first inter-layer condition.

6. The laser processing method according to any one of claims 1 to 5,
wherein in the base material, a third layer having a thermal expansion coefficient different from a thermal expansion coefficient of the first layer is formed on the other surface of the first layer,
the method further comprises a step of cutting a second inter-layer part, which extends from a near-inter-layer position inward from the other surface of the first layer to a near-inter-layer position inward from a surface of a third layer through an inter-layer between the first layer and the third layer under a predetermined second inter-layer condition, by irradiating the second inter-layer part with the laser light, and
the second inter-layer condition is a condition in which an amount of heat input by the laser light is less than the amount of heat input under the first condition.

7. The laser processing method according to claim 6, further comprising a step of cutting the third layer by irradiating a part of the third layer from the near-inter-layer position with the laser light under a third condition in which an amount of heat input by the laser light is greater than the amount of heat input under the second inter-layer condition.

8. The laser processing method according to claim 7,
wherein the steps of cutting the second layer, the first inter-layer part, the first layer, the second inter-layer part, and the third layer are executed in this order.

9. The laser processing method according to claim 7,
wherein the steps of cutting the second layer and the first inter-layer part are executed with the second layer disposed on a side irradiated with the laser light,
then, the third layer is disposed on the side irradiated with the laser light, and the steps of cutting the third layer and the second inter-layer part are executed, and
then, the step of cutting the first layer is executed on the first layer exposed through the cutting.

10. The laser processing method according to claim 7,
wherein in the base material, a third layer having a thermal expansion coefficient different from a thermal expansion coefficient of the first layer is formed on the other surface of the first layer, and
a cooling medium is supplied to the third layer to cool the third layer in a case where the first layer and the second layer are cut.

11. The laser processing method according to any one of claims 1 to 10,
wherein the first inter-layer condition and the first condition are different from each other in at least one of an output of the laser light, a scanning speed of the laser light, or a spot diameter of the laser light.

12. A laser processing method of performing cutting processing of cutting a base material, which includes a first layer and a second layer laminated on a surface of the first layer and having a thermal expansion coefficient different from a thermal expansion coefficient of the first layer, by irradiating the base material with laser light, the laser processing method comprising:
a step of disposing the second layer on a side opposite to a side irradiated with the laser light;
a step of cutting the first layer by irradiating the first layer with the laser light while supplying a cooling medium to the second layer to cool the second layer; and
a step of cutting the second layer by irradiating the second layer with the laser light after cutting the first layer.

13. A laser processing device that performs cutting processing of cutting a base material, which includes a first layer and a second layer laminated on one surface of the first layer and having a thermal expansion coefficient different from a thermal expansion coefficient of the first layer, by irradiating the base material with laser light, the laser processing device comprising:
a laser irradiation part that irradiates the base material with the laser light; and
a controller that controls an operation of the laser irradiation part,
wherein the controller
cuts a first inter-layer part, which extends from a near-inter-layer position inward from a surface of the second layer to a near-inter-layer position inward from the one surface of the first layer through an inter-layer between the second layer and the first layer, by irradiating the first inter-layer part with the laser light under a predetermined first inter-layer condition, and
cuts the first layer by irradiating a part of the first layer inward from the near-inter-layer position with the laser light under a first condition, and
the first inter-layer condition is a condition in which an amount of heat input by the laser light is less than an amount of heat input under the first condition.

14. A laser processing device that performs cutting processing of cutting a base material, which includes a first layer and a second layer laminated on one surface of the first layer and having a thermal expansion coefficient different from a thermal expansion coefficient of the first layer, by irradiating the base material with laser light, the laser processing device comprising:
a laser irradiation part that irradiates the base material with the laser light;
a cooling part that supplies a cooling medium to the base material; and
a controller that controls operations of the laser irradiation part and the cooling part,
wherein the controller
cuts the first layer from the base material, in which the second layer is disposed on a side opposite to a side irradiated with the laser light, by irradiating the first layer with the laser light while supplying the cooling medium to the second layer to cool the second layer, and
cuts the second layer by irradiating the second layer with the laser light after cutting the first layer.
